(19) **Europäisches Patentamt**
**European Patent Office**
**Office européen des brevets**

(11) **EP 4 629 544 A1**

(12) **EUROPEAN PATENT APPLICATION**
published in accordance with Art. 153(4) EPC

(43) Date of publication:
**08.10.2025 Bulletin 2025/41**

(21) Application number: **24755998.2**

(22) Date of filing: **31.01.2024**

(51) International Patent Classification (IPC):
**H04L 5/00** (2006.01)

(52) Cooperative Patent Classification (CPC):
**H04L 5/00**

(86) International application number:
**PCT/CN2024/075043**

(87) International publication number:
**WO 2024/169624 (22.08.2024 Gazette 2024/34)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **15.02.2023  CN 202310155124**

(71) Applicant: **Huawei Technologies Co., Ltd.
Shenzhen, Guangdong 518129 (CN)**

(72) Inventors:
• **FAN, Bo
Shenzhen, Guangdong 518129 (CN)**
• **YUAN, Shitong
Shenzhen, Guangdong 518129 (CN)**
• **CHEN, Lei
Shenzhen, Guangdong 518129 (CN)**
• **LIU, Fengwei
Shenzhen, Guangdong 518129 (CN)**

(74) Representative: **Isarpatent
Patent- und Rechtsanwälte
Barth Hassa Peckmann & Partner mbB
Friedrichstraße 31
80801 München (DE)**

(54) **DATA TRANSMISSION METHOD AND RELATED APPARATUS**

(57)    This application provides a data transmission method and a related apparatus. This helps resolve a problem of time domain resource mapping of a plurality of PTRS ports. The method includes: determining x phase tracking reference signal PTRS groups, where each of the x PTRS groups includes y PTRS samples, and x and y are integers greater than or equal to 2; determining a first PTRS signal corresponding to a first PTRS port, where the first PTRS signal includes $z_1$ PTRS samples; determining a second PTRS signal corresponding to a second PTRS port, where the second PTRS signal includes $z_2$ PTRS samples; and during uplink data transmission, sending the first PTRS signal corresponding to the first PTRS port and the second PTRS signal corresponding to the second PTRS port. $z_1$ and $z_2$ are positive integers, and a sum of $z_1$ and $z_2$ is equal to a product of x and y.

600

| | |
|---|---|
| Determine x PTRS groups, where each PTRS group includes y PTRS samples | S601 |
| Determine a first PTRS signal corresponding to a first PTRS port, where the first PTRS signal includes z1 PTRS samples | S602 |
| Determine a second PTRS signal corresponding to a second PTRS port, where the second PTRS signal includes z2 PTRS samples | S603 |
| During uplink data transmission, send the first PTRS signal corresponding to the first PTRS port and the second PTRS signal corresponding to the second PTRS port | S604 |

FIG. 6

**Description**

This application claims priority to Chinese Patent Application No. 202310155124.6, filed with the China National Intellectual Property Administration on February 15, 2023 and entitled "DATA TRANSMISSION METHOD AND RELATED APPARATUS", which is incorporated herein by reference in its entirety.

**TECHNICAL FIELD**

This application relates to the communication field, and in particular, to a data transmission method and a related apparatus.

**BACKGROUND**

In a 5th generation (5th generation, 5G) mobile communication system, high-frequency communication may be used. In other words, data transmission is performed by using a high-frequency band signal. In high-frequency communication, phase noise (which may be referred to as phase noise for short, and means that, due to a non-ideal antenna, phase shift occurs on a signal after the signal is sent via the antenna) has great impact on transmission performance. To resolve this problem, a transmitting end sends a phase tracking reference signal (phase tracking reference signal, PTRS) when sending data, and a receiving end may determine specific information about phase noise (including a signal phase shift value caused by the phase noise) by measuring the PTRS, to remove impact of the phase noise from the received data.

Uplink transmission is used as an example. When sending uplink data, a terminal device needs to send the uplink data and a PTRS signal together to a network device, and the network device obtains, by measuring the PTRS, specific information about phase noise experienced by the uplink data. A waveform that may be used for the uplink transmission includes a discrete Fourier transform-spread-orthogonal frequency division multiplexing (discrete Fourier transform-spread-orthogonal frequency division multiplexing, DFT-s-OFDM) waveform. When the DFT-s-OFDM waveform is used, the terminal device can transmit only a single data stream. The single data stream is associated with a single PTRS port. The network device may obtain, by measuring a PTRS transmitted through the single PTRS port, phase noise experienced by the single data stream. When the PTRS signal is transmitted through the single PTRS port, the terminal device inserts the PTRS signal into a time domain signal before a discrete Fourier transform (discrete Fourier transform, DFT) module, so that the PTRS signal is at a specific position in a time domain signal input to the DFT module, and an uplink data signal is at another position in the time domain signal. To improve performance of the transmission by using the DFT-s-OFDM waveform, the terminal device may increase a quantity of transmitted data streams from a single data stream to a plurality of data streams. Different data streams in the plurality of data streams may experience different phase noise. Therefore, a plurality of PTRS ports need to be used for measurement of the phase noise experienced by the different data streams. In other words, the phase noise experienced by the plurality of data streams needs to be measured based on PTRS signals transmitted through the plurality of PTRS ports.

However, when the DFT-s-OFDM waveform is used, an existing protocol relates to only a time domain signal mapping rule for a single PTRS port, and there is no time domain signal mapping rule for a plurality of PTRS ports. Consequently, a problem of time domain resource mapping of the plurality of PTRS ports cannot be resolved.

**SUMMARY**

This application provides a data transmission method and a related apparatus, to help resolve a problem of time domain resource mapping of a plurality of PTRS ports.

According to a first aspect, a data transmission method is provided. The method may be performed by a terminal device, or may be performed by a component (for example, a processor, a chip, or a chip system) of the terminal device, or may be implemented by a logical module or software that can implement all or some functions of the terminal device. The method includes: determining x phase tracking reference signal PTRS groups, where each of the x PTRS groups includes y PTRS samples, and x and y are integers greater than or equal to 2; determining a first PTRS signal corresponding to a first PTRS port, where the first PTRS signal includes $z1$ PTRS samples; determining a second PTRS signal corresponding to a second PTRS port, where the second PTRS signal includes $z2$ PTRS samples; and during uplink data transmission, sending the first PTRS signal corresponding to the first PTRS port and the second PTRS signal corresponding to the second PTRS port. $z1$ and $z2$ are positive integers, and a sum of $z1$ and $z2$ is equal to a product of x and y.

In this application, an example in which the terminal device transmits PTRS signals through the first PTRS port and the second PTRS port is used. The terminal device performs uplink data transmission through the first PTRS port and the second PTRS port, to measure phase noise experienced by different data streams. The terminal device may allocate PTRS samples in the PTRS group to the first PTRS port and the second PTRS port, and the first PTRS port and the second PTRS port respectively occupy time domain signal positions in which PTRS samples respectively corresponding to the first PTRS port and the second PTRS port are located, so that the first PTRS port and the second PTRS port of the terminal device can be distinguished in time domain, a problem of time domain resource mapping of a plurality of PTRS ports is resolved, and multi-port PTRS signal transmission in a DFT-s-OFDM waveform is supported.

With reference to the first aspect, in some implementations of the first aspect, the $z1$ PTRS samples include a PTRS sample included in $x1$ PTRS groups, the $z2$ PTRS samples include a PTRS sample included in $x2$ PTRS groups, and $x1+x2=x$.

In this application, the terminal device allocates the $x$ PTRS groups to the first PTRS port and the second PTRS port. In other words, the first PTRS port occupies the $x1$ PTRS groups and time domain signal positions corresponding to the $x1$ PTRS groups, and the second PTRS port occupies the $x2$ PTRS groups and time domain signal positions corresponding to the $x2$ PTRS groups.

With reference to the first aspect, in some implementations of the first aspect, when a same quantity of resource blocks (resource blocks, RBs) are used for the uplink data transmission, $x$ is equal to twice a quantity of PTRS groups corresponding to sending a PTRS signal by the terminal device through a single PTRS port.

In this application, when quantities of RBs are the same, a quantity of PTRS groups corresponding to sending PTRS signals by the terminal device through the two PTRS ports is twice the quantity of PTRS groups corresponding to sending the PTRS signal by the terminal device through the single PTRS port. In this way, after the terminal device allocates the $x$ PTRS groups to the two PTRS ports, a quantity of PTRS groups occupied by each PTRS port is the same as a quantity of PTRS groups occupied by a single PTRS port. This helps improve pilot density of each PTRS port and improve accuracy of phase noise measurement.

With reference to the first aspect, in some implementations of the first aspect, the $x1$ PTRS groups include an odd-numbered PTRS group in the $x$ PTRS groups, and the $x2$ PTRS groups include an even-numbered PTRS group in the $x$ PTRS groups; or the $x1$ PTRS groups include an even-numbered PTRS group in the $x$ PTRS groups, and the $x2$ PTRS groups include an odd-numbered PTRS group in the $x$ PTRS groups.

In this application, for example, the terminal device may equally allocate the $x$ PTRS groups to the first PTRS port and the second PTRS port. This helps balance pilot density of the two PTRS ports, and avoids a problem that accuracy of phase noise measurement is excessively low due to excessively low pilot density of one of the two PTRS ports.

Optionally, the $x1$ PTRS groups occupied by the first PTRS port include a first half of the $x$ PTRS groups, and the $x2$ PTRS groups occupied by the second PTRS port include a second half of the PTRS groups; or the $x1$ PTRS groups occupied by the first PTRS port include a second half of the $x$ PTRS groups, and the $x2$ PTRS groups occupied by the second PTRS port include a first half of the PTRS groups.

With reference to the first aspect, in some implementations of the first aspect, the $z1$ PTRS samples include a first part of PTRS samples in each of the $x$ PTRS groups, the $z2$ PTRS samples include a second part of PTRS samples in each of the $x$ PTRS groups, and the first part of PTRS samples and the second part of PTRS samples are two parts of PTRS samples included in one PTRS group.

In this application, the terminal device allocates the first part of PTRS samples in each PTRS group to the first PTRS port, and allocates the second part of PTRS samples in each PTRS group to the second PTRS port. In other words, the first PTRS port occupies the first part of PTRS samples in each PTRS group and time domain signal positions corresponding to the first part of PTRS samples, and the second PTRS port occupies the second part of PTRS samples in each PTRS group and time domain signal positions corresponding to the second part of PTRS samples.

Optionally, the first PTRS port occupies an odd-numbered PTRS sample in each PTRS group, and the second PTRS port occupies an even-numbered PTRS sample in each PTRS group; or the first PTRS port occupies an even-numbered PTRS sample in each PTRS group, and the second PTRS port occupies an odd-numbered PTRS sample in each PTRS group.

With reference to the first aspect, in some implementations of the first aspect, when the same quantity of RBs are used for the uplink data transmission, $y$ is equal to twice a quantity of PTRS samples included in the PTRS group corresponding to sending the PTRS signal by the terminal device through the single PTRS port.

In this application, the quantity of PTRS samples included in the PTRS group is a length of the PTRS group. When transmitting the PTRS signals through the two PTRS ports, the terminal device may double the quantity of PTRS samples in the PTRS group, so that a quantity of PTRS samples in PTRS groups corresponding to the two PTRS ports is twice the quantity of PTRS samples in the PTRS group corresponding to the single PTRS port. In this way, after the terminal device allocates PTRS samples in each PTRS group to the two PTRS ports, a quantity of PTRS samples in a PTRS group occupied by each PTRS port is the same as a quantity of PTRS samples in a PTRS group occupied by a single PTRS port. This helps improve pilot density of each PTRS port and improve accuracy of phase noise measurement.

With reference to the first aspect, in some implementations of the first aspect, the first part of PTRS samples includes a first half of PTRS samples in one PTRS group, and the second part of PTRS samples includes a second half of PTRS samples in the one PTRS group; or the first part of PTRS samples includes a second half of PTRS samples in one PTRS group, and the second part of PTRS samples includes a first half of PTRS samples in the one PTRS group.

In this application, for example, the terminal device may equally allocate the PTRS samples in each PTRS group to the first PTRS port and the second PTRS port. This helps balance pilot density of the two PTRS ports, and avoids a problem that accuracy of phase noise measurement is excessively low due to excessively low pilot density of one of the two PTRS ports.

With reference to the first aspect, in some implementations of the first aspect, the method further includes: receiving first information from a network device, where the first information is for configuring a waveform corresponding to the uplink data transmission, a transmission mode used for the uplink data transmission, and a maximum quantity N of PTRS ports used for the uplink data transmission; and determining, based on the one or more of the waveform, the transmission mode, or the maximum quantity of PTRS ports, a quantity M of PTRS ports used for the uplink data transmission.

The waveform includes a DFT-s-OFDM waveform or a cyclic prefix-orthogonal frequency division multiplexing (cyclic prefix-orthogonal frequency division multiplexing, CP-OFDM) waveform, and N is a positive integer greater than or equal to 1. The transmission mode includes at least one or more of a first transmission mode, a second transmission mode, or a third transmission mode, the first transmission mode is sending a same data stream of a same transport block (transport block, TB) separately via two uplink beams, the second transmission mode is sending different data streams of a same TB separately via two uplink beams, and the third transmission mode is sending data streams of two different TBs respectively via two uplink beams.

For example, the first information is configuration information carried in radio resource control (radio resource control, RRC) signaling. The waveform configured by the network device for the terminal device may be a DFT-s-OFDM waveform or a CP-OFDM waveform. A difference between the CP-OFDM waveform and the DFT-s-OFDM waveform lies in that, when the DFT-s-OFDM waveform is used, a signal needs to be processed by a DFT module, which is also referred to as transform precoding (transform precoding), and when the CP-OFDM waveform is used, a signal does not need to be processed by the DFT module or the transform precoding is not needed. Therefore, in terms of waveform configuration, the network device may implement the waveform configuration by configuring the transform precoding. For example, if the network device configures the terminal device to use the transform precoding for uplink data transmission, it indicates that a waveform used for the uplink data transmission of the terminal device is configured as the DFT-s-OFDM waveform. On the contrary, if the network device configures the terminal device not to use the transform precoding for uplink data transmission, it indicates that a waveform used for the uplink data transmission of the terminal device is configured as the CP-OFDM waveform.

When the waveform used for the uplink data transmission of the terminal device is configured as the DFT-s-OFDM waveform, the network device may configure the maximum quantity N of PTRS ports used by the terminal device for the uplink data transmission.

With reference to the first aspect, in some implementations of the first aspect, determining, based on the one or more of the waveform, the transmission mode, or the maximum quantity of PTRS ports, the quantity M of PTRS ports used for the uplink data transmission includes: if N=2, the waveform is the DFT-s-OFDM waveform, and the transmission mode is the first transmission mode, determining that M=1; or if N=2, the waveform is the DFT-s-OFDM waveform, and the transmission mode is the second transmission mode, determining that M=2; or if N=2, the waveform is the DFT-s-OFDM waveform, and the transmission mode is the third transmission mode, determining that M=2.

With reference to the first aspect, in some implementations of the first aspect, the method further includes: When N=2, the waveform is the DFT-s-OFDM waveform, and the transmission mode is the second transmission mode, if a quantity of data streams for the uplink data transmission is equal to 2, a waveform used for the uplink data transmission is the DFT-s-OFDM waveform; or if a quantity of data streams for the uplink data transmission is greater than 2, a waveform used for the uplink data transmission is the CP-OFDM waveform.

Optionally, the terminal device receives downlink control information (downlink control information, DCI) sent by the network device. The DCI indicates scheduling information for the uplink data transmission, and includes at least one or more of a time-frequency resource used for the uplink data transmission, the quantity of data streams used for the uplink data transmission, or precoding information used for the uplink data transmission.

According to a second aspect, a data transmission method is provided. The method may be performed by a terminal device, or may be performed by a component (for example, a processor, a chip, or a chip system) of the terminal device, or may be implemented by a logical module or software that can implement all or some functions of the terminal device. The method includes: determining x phase tracking reference signal PTRS groups, where each of the x PTRS groups includes y PTRS samples, and x and y are integers greater than or equal to 2; determining a first PTRS signal corresponding to a first PTRS port, where the first PTRS signal includes all PTRS samples in the x PTRS groups, and the first PTRS signal is modulated by using a first orthogonal cover code (orthogonal cover code, OCC) sequence; determining a second PTRS signal corresponding to a second PTRS port, where the second PTRS signal includes all the PTRS samples in the x PTRS groups, and the second PTRS signal is modulated by using a second OCC sequence; and during uplink data transmission, sending the first PTRS signal corresponding to the first PTRS port and the second PTRS signal corresponding to the second PTRS port. The first OCC sequence and the second OCC sequence are two of the y OCC sequences, and the first OCC sequence is different from the second OCC sequence.

When the terminal device sends the first PTRS signal through the first PTRS port, and sends the second PTRS signal through the second PTRS port, time domain signal positions in a same PTRS group may be shared, but the first PTRS signal and the second PTRS signal are modulated by using different OCC sequences. In this way, although a time domain resource of the first PTRS signal is the same as a time domain resource of the second PTRS signal, the first PTRS signal is different from the second PTRS signal in code domain. This helps improve resource utilization and implement distinguishing between different PTRS signals.

With reference to the second aspect, in some implementations of the second aspect, that the first OCC sequence and the second OCC sequence are two of the y OCC sequences includes: The first OCC sequence is an OCC sequence numbered $q_0$ in the y OCC sequences, the second OCC sequence is a sequence numbered $q_1$ in the y OCC sequences, and $q_0$ and $q_1$ are respectively calculated by using the following formulas:

$$q_0 = N_{RNTI} \bmod (y/2);$$

and

$$q_1 = N_{RNTI} \bmod (y/2) + (y/2).$$

$N_{RNTI}$ represents a cell-radio network temporary identifier (cell-radio network temporary identifier, C-RNTI) of the terminal device.

With reference to the second aspect, in some implementations of the second aspect, that the first OCC sequence and the second OCC sequence are two of the y OCC sequences includes: The first OCC sequence is an OCC sequence numbered $q_0$ in the y OCC sequences, the second OCC sequence is a sequence numbered $q_1$ in the y OCC sequences, and $q_0$ and $q_1$ are respectively calculated by using the following formulas:

$$q_0 = (N_{RNTI} \bmod (y/2)) * 2;$$

and

$$q_1 = (N_{RNTI} \bmod (y/2)) * 2 + 1.$$

$N_{RNTI}$ represents a C-RNTI of the terminal device.

With reference to the second aspect, in some implementations of the second aspect, when a same quantity of resource blocks RBs are used for the uplink data transmission, y is equal to twice a quantity of PTRS samples included in a PTRS group corresponding to sending a PTRS signal by the terminal device through a single PTRS port.

In this application, after a quantity of PTRS samples (that is, a length of a PTRS group) included in the PTRS group is doubled, a length of an OCC sequence corresponding to the PTRS group is also doubled, and a quantity of OCC sequences is also doubled. In other words, the length of the OCC sequences of the PTRS group when the two PTRS ports are used is twice the length of the OCC sequence when the single PTRS port is used.

According to a third aspect, a data transmission apparatus is provided, including configured to perform the method in any possible implementation of any one of the foregoing aspects. Specifically, the apparatus includes a module configured to perform the method in any possible implementation of any one of the foregoing aspects.

In a design, the apparatus may include a module that is in one-to-one correspondence with the method/operation/step/action described in any one of the foregoing aspects. The module may be a hardware circuit, or may be software, or may be implemented by a hardware circuit in combination with software.

In another design, the apparatus is a communication chip. The communication chip may include an input circuit or an interface configured to send information or data, and an output circuit or an interface configured to receive information or data.

In another design, the apparatus is a terminal device. The terminal device may include a transmitter configured to send information or data, and a receiver configured to receive information or data.

In another design, the apparatus is configured to perform the method in any possible implementation of any one of the foregoing aspects, and the apparatus may be configured in a terminal device.

According to a fourth aspect, a data transmission apparatus is provided, including a processor. The processor is configured to invoke a computer program from a memory and run the computer program, to enable the apparatus to perform the method in any possible implementation of any one of the foregoing aspects.

Optionally, the apparatus further includes the memory, and the memory may be configured to store instructions and data. The memory is coupled to the processor. When the processor executes the instructions stored in the memory, the method described in the foregoing aspects may be implemented.

Optionally, the apparatus further includes a transmitter (transmitter machine) and a receiver (receiver machine). The transmitter and the receiver may be separately disposed, or may be integrated together, and are referred to as a transceiver machine (transceiver).

According to a fifth aspect, a computer program product is provided. The computer program product includes a computer program (which may also be referred to as code or instructions), and when the computer program is run, a computer is enabled to perform the method in any possible implementation of any one of the foregoing aspects.

According to a sixth aspect, a computer-readable storage medium is provided. The computer-readable storage medium stores a computer program (which may also be referred to as code or instructions), and when the computer program is run on a computer, the computer is enabled to perform the method in any possible implementation of the any one of the foregoing aspects.

According to a seventh aspect, this application provides a chip system. The chip system includes at least one processor, configured to support implementation of a function in any one of the foregoing aspects, for example, receiving or processing data in the foregoing method.

In a possible design, the chip system further includes a memory, the memory is configured to store program instructions and data, and the memory is located inside or outside the processor.

Optionally, the chip system may include a chip, or may include a chip and another discrete component.

**BRIEF DESCRIPTION OF DRAWINGS**

FIG. 1 is a diagram of uplink data transmission according to an embodiment of this application;

FIG. 2 is a diagram of PTRS signal mapping according to an embodiment of this application;

FIG. 3 is a diagram of another PTRS signal mapping according to an embodiment of this application;

FIG. 4 is a diagram of a communication system according to an embodiment of this application;

FIG. 5 is a schematic flowchart of a data transmission method according to an embodiment of this application;

FIG. 6 is a schematic flowchart of another data transmission method according to an embodiment of this application;

FIG. 7 to FIG. 14 are diagrams of PTRS signal mapping according to an embodiment of this application;

FIG. 15 is a schematic flowchart of still another data transmission method according to an embodiment of this application;

FIG. 16 and FIG. 17 are diagrams of OFDM symbols used by PTRS ports according to an embodiment of this application; and

FIG. 18 to FIG. 20 are block diagrams of a data transmission apparatus according to an embodiment of this application.

**DESCRIPTION OF EMBODIMENTS**

The following describes technical solutions of this application with reference to accompanying drawings.

To clearly describe the technical solutions in embodiments of this application, the following first describes related terms in this application in detail.

1. Beam

A beam in a new radio (new radio, NR) protocol may be represented as a spatial domain filter (spatial domain filter), or may be referred to as a spatial filter (spatial filter), a spatial domain parameter (spatial domain parameter), a spatial parameter (spatial parameter), a spatial domain setting (spatial domain setting), a spatial setting (spatial setting), quasi-colocation (quasi-colocation, QCL) information, a QCL assumption, a QCL indication, or the like. The beam may be indicated by using a transmission configuration indicator state (transmission configuration indicator state, TCI-state) parameter or a spatial relation (spatial relation) parameter. Therefore, in embodiments of this application, the beam may be replaced with a spatial domain filter, a spatial filter, a spatial domain parameter, a spatial parameter, a spatial domain setting, a spatial setting, QCL information, a QCL assumption, a QCL indication, an uplink TCI-state, a downlink TCI-state, a spatial relation, or the like. The foregoing terms are also equivalent to each other, and the beam may be replaced with another term indicating a beam. This is not limited in embodiments of this application.

A beam used for sending a signal may be referred to as a transmission beam (transmission beam, Tx beam), or may be referred to as a spatial domain transmission filter (spatial domain transmission filter), a spatial transmission filter (spatial transmission filter), a spatial domain transmission parameter (spatial domain transmission parameter), a spatial transmission parameter (spatial transmission parameter), or a spatial domain transmission setting (spatial domain transmission setting), or a spatial transmission setting (spatial transmission setting). A downlink transmission beam may be indicated by using a TCI-state.

A beam used for receiving a signal may be referred to as a reception beam (reception beam, Rx beam), or may be referred to as a spatial domain reception filter (spatial domain reception filter), a spatial reception filter (spatial reception filter), a spatial domain reception parameter (spatial domain reception parameter), a spatial reception parameter (spatial reception parameter), a spatial domain reception setting (spatial domain reception setting), or a spatial reception setting (spatial reception setting). An uplink transmission beam may be indicated by using a spatial relation (spatial relation), an uplink TCI-state, or a sounding reference signal (sounding reference signal, SRS) resource (indicating a transmission beam using the SRS). Therefore, the uplink beam may alternatively be replaced with the SRS resource.

The transmission beam may refer to distribution of signal strength formed in different directions in space after a signal is transmitted through an antenna, and the reception beam may refer to distribution of signal strength, in different directions in space, of a radio signal received from an antenna.

In addition, the beam may be a wide beam, a narrow beam, or a beam of another type. A technology for forming the beam may be a beamforming technology or another technology. The beamforming technology may be specifically a digital beamforming technology, an analog beamforming technology, a hybrid digital/analog beamforming technology, or the like.

The beam usually corresponds to a resource. For example, during beam measurement, a network device measures different beams by using different resources, a terminal device feeds back measured resource quality, and the network device knows quality of a corresponding beam. During data transmission, beam information is also indicated by using a resource corresponding to the beam information. For example, the network device indicates information about a physical downlink control shared channel (physical downlink sharing channel, PDSCH) beam of the terminal device by using a transmission configuration indication (transmission configuration indication, TCI) field in the DCI.

Optionally, a plurality of beams having a same communication characteristic or similar communication characteristics are considered as one beam. One beam may include one or more antenna ports, configured to transmit a data channel, a control channel, a sounding signal, and the like. The one or more antenna ports forming the beam may also be considered as one antenna port set.

In embodiments of this application, unless otherwise specified, the beam is a transmission beam of the network device. During beam measurement, each beam of the network device corresponds to one resource. Therefore, an index of a resource may uniquely identify a beam corresponding to the resource.

2. Resource

During beam measurement, there is a correspondence between a beam and a resource (a network device sends, by using one beam, a resource corresponding to the beam). That a terminal device measures quality of the resource is equivalent to measuring quality of the beam. The resource may be an uplink signal resource, or may be a downlink signal resource. An uplink signal includes but is not limited to an SRS and a demodulation reference signal (demodulation reference signal, DMRS). A downlink signal includes but is not limited to a channel state information reference signal (channel state information reference signal, CSI-RS), a cell specific reference signal (cell specific reference signal, CS-RS), a user equipment specific reference signal (user equipment specific reference signal, US-RS), a demodulation reference signal (demodulation reference signal, DMRS), and a synchronization signal/physical broadcast channel block (synchronization system/physical broadcast channel block, SS/PBCH block). The SS/PBCH block may be referred to as a synchronization signal block (synchronization signal block, SSB) for short.

3. Antenna panel (panel)

An antenna panel may be an antenna panel of a network device, or may be an antenna panel of a terminal device. There are usually one or more antennas on one antenna panel. These antennas are arranged into an antenna array, and beamforming is performed, to form an analog beam. The antenna array may generate analog beams pointing to different directions. In other words, a plurality of analog beams may be formed on each antenna panel, and a best analog beam used by the antenna panel may be determined through beam measurement. The terminal device may be equipped with a plurality of antenna panels. The antenna panels may be distributed at different positions, and face different directions. This can ensure that at least one antenna panel faces the network device regardless of a direction that the terminal device faces, and the terminal device can perform data transmission with the network device. The terminal device may simultaneously enable all antenna panels for transmission. Alternatively, to reduce power consumption of the terminal device, the terminal device may perform transmission by using only one antenna panel once, and another unused antenna panel may be disabled. Whether the antenna panel of the terminal device is in an enabled state or a disabled state usually

EP 4 629 544 A1

needs to be notified to the network device. In other words, the terminal device and the network device usually need to exchange status information of the antenna panel.

In embodiments of this application, unless otherwise specified, an antenna panel is an antenna panel of the terminal device. In a protocol, the antenna panel may be represented by a panel, a panel index (panel index), or the like. In addition, the antenna panel may be implicitly represented in another manner. For example, the antenna panel may also be represented through an antenna port or an antenna port group, where the port is, for example, a CSI-RS port, an SRS port, a DMRS port, a PTRS port, a CRS port, a time-frequency tracking reference signal (tracking reference signal, TRS) port, or an SSB port. Alternatively, the antenna panel may be represented by using a resource or a resource group, for example, a CSI-RS resource, an SRS resource, a DMRS resource, a PTRS resource, a CRS resource, a TRS resource, or an SSB resource, or may be represented by using a channel, for example, a physical uplink control channel (physical uplink control channel, PUCCH), a physical uplink shared channel (physical uplink sharing channel, PUSCH), a physical random access channel (physical random access channel, PRACH), a physical downlink shared channel (physical downlink sharing channel, PDSCH), a physical downlink control channel (physical downlink control channel, PDCCH), or a physical broadcast channel (physical broadcast channel, PBCH), or may be represented by using a beam, QCL, a TCI-state, a spatial relation, or an index configured in QCL, a TCI-state, or a spatial relation, or may be represented by using a beam group, a QCL group, a TCI-state group, a spatial relation group, or the like, or may be represented by using a terminal capability parameter set reported by the terminal device. There is a correspondence between the terminal capability parameter set and the antenna panel. One terminal capability parameter set includes a related terminal capability corresponding to one antenna panel, for example, includes a maximum transport layer, a maximum quantity of SRS ports, and maximum transmit power that correspond to one antenna panel.

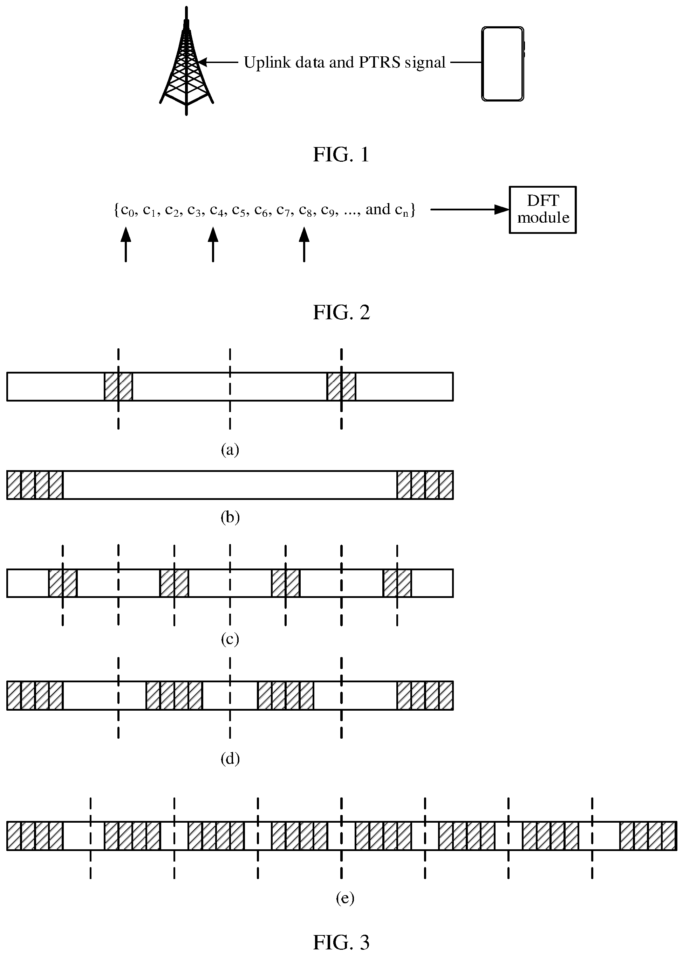

FIG. 1 is a diagram of uplink data transmission according to an embodiment of this application. During uplink transmission, a terminal device simultaneously sends uplink data and a PTRS signal to a network device. The network device obtains, by measuring the PTRS signal, information about phase noise experienced by the uplink data.

Uplink data transmission may be performed by using a CP-OFDM waveform or a DFT-s-OFDM waveform. When the CP-OFDM waveform is used, the terminal device may transmit one or more data streams. These data streams may be associated with a same PTRS port or different PTRS ports. The network device obtains phase noise experienced by the one or more data streams by measuring PTRS signals of these PTRS ports. When the DFT-s-OFDM waveform is used, the terminal device can transmit only a single data stream, and the single data stream is associated with a single PTRS port. The terminal device obtains phase noise experienced by the single data stream by measuring a PTRS signal of the single PTRS port.

The following describes a time domain resource mapping rule for a single PTRS port with reference to an uplink transmission scenario.

During uplink data transmission, the terminal device needs to send the uplink data and the PTRS signal together to the network device. Specifically, the terminal device inserts the PTRS signal into a time domain signal, so that the PTRS signal is at a specific position in a time domain signal input to a discrete Fourier module, and an uplink data signal is at another position in the time domain signal. In this way, the uplink data and the PTRS signal can be simultaneously transmitted.

For example, FIG. 2 is a diagram of PTRS signal mapping according to an embodiment of this application. As shown in FIG. 2, $\{c_0, c_1, c_2, c_3, c_4, c_5, c_6, c_7, c_8, c_9, ..., $ and $c_n\}$ is a time domain signal input to a DFT module. $c_0$, $c_4$, and $c_8$ are PTRS signals, and other signals are uplink data signals.

A terminal device may determine a position of the PTRS signal in the time domain signal in the following manner. First, the terminal device divides PTRS signals into x PTRS groups (PTRS groups), where each PTRS group includes y PTRS samples (PTRS sample). In other words, a PTRS signal sequence with a length of x*y is equally divided into x parts, and each part includes y PTRS samples.

Values of x and y are related to a quantity of RBs corresponding to uplink transmission. As shown in Table 1, $N_{RB}$ represents a quantity of RBs used for the uplink transmission, $N_{RB0}$, $N_{RB1}$, $N_{RB2}$, $N_{RB3}$, and $N_{RB4}$ are different thresholds configured by a network device for the terminal device. The terminal device determines the values of x and y based on the quantity of RBs used for the uplink transmission.

Table 1

| Quantity of RBs | x | y |
|---|---|---|
| $N_{RB0} \leq N_{RB} < N_{RB1}$ | 2 | 2 |
| $N_{RB1} \leq N_{RB} < N_{RB2}$ | 2 | 4 |
| $N_{RB2} \leq N_{RB} < N_{RB3}$ | 4 | 2 |
| $N_{RB3} \leq N_{RB} < N_{RB4}$ | 4 | 4 |

(continued)

| Quantity of RBs | x | y |
|---|---|---|
| $N_{RB4} \leq N_{RB}$ | 8 | 4 |

After determining the values of x and y, the terminal device maps PTRS samples in the x PTRS groups to specific positions in the time domain signal by using a preset time domain signal mapping rule. Different values of x and y correspond to different mapping rules. FIG. 3 is a diagram of another PTRS signal mapping according to an embodiment of this application. FIG. 3 shows time domain signal mapping rules for a PTRS port in different combinations of x and y.

When x=2 and y=2, as shown in (a) in FIG. 3, a time domain signal (including an uplink data signal and a PTRS signal) is equally divided into four parts, and two PTRS groups respectively occupy a last time domain signal position in a first part of the time domain signal and a first time domain signal position in a second part of the time domain signal, and a last time domain signal position in a third part of the time domain signal and a first time domain signal position in a fourth part of the time domain signal.

When x=2 and y=4, as shown in (b) in FIG. 3, two PTRS groups respectively occupy first four time domain signal positions and last four time domain signal positions in the entire time domain signal.

When x=4 and y=2, as shown in (c) in FIG. 3, the time domain signal is equally divided into eight parts, and four PTRS groups respectively occupy a last time domain signal position in a first part of the time domain signal and a first time domain signal position in a second part of the time domain signal, a last time domain signal position in a third part of the time domain signal and a first time domain signal position in a fourth part of the time domain signal, a last time domain signal position in a fifth part of the time domain signal and a first time domain signal position in a sixth part of the time domain signal, and a last time domain signal position in a seventh part of the time domain signal and a first time domain signal position in an eighth part of the time domain signal.

When x=4 and y=4, as shown in (d) in FIG. 3, the time domain signal is equally divided into four parts, and four PTRS groups respectively occupy first four time domain signal positions in a first part of the time domain signal, intermediate four time domain signal positions in a second part of the time domain signal, intermediate four time domain signal positions in a third part of the time domain signal, and last four time domain signal positions in a fourth part of the time domain signal.

When x=8 and y=4, as shown in (e) in FIG. 3, the time domain signal is equally divided into eight parts, and eight PTRS groups respectively occupy first four time domain signal positions in a first part of the time domain signal, intermediate four time domain signal positions in a second part of the time domain signal, intermediate four time domain signal positions in a third part of the time domain signal, intermediate four time domain signal positions in a fourth part of the time domain signal, intermediate four time domain signal positions in a fifth part of the time domain signal, intermediate four time domain signal positions in a sixth part of the time domain signal, intermediate four time domain signal positions in a seventh part of the time domain signal, and last four time domain signal positions in an eighth part of the time domain signal.

An objective of dividing the PTRS signals into x PTRS groups is to perform code division multiplexing in the PTRS group, so that different terminal devices share a same PTRS sequence. When a plurality of terminal devices are to share a same PTRS sequence to perform uplink transmission, if the plurality of terminal devices use a same combination of x and y, time domain signal positions corresponding to PTRS signals of the plurality of terminal devices are the same. This may cause mutual interference. Therefore, different terminal devices may share a same PTRS time domain signal position, and use different OCC sequences to modulate the PTRS sequence, so that PTRS sequences of different terminal devices are orthogonal in code domain, and a network device may independently obtain the PTRS sequences transmitted by the terminal devices, thereby reducing signal interference between the different terminal devices. A length of an OCC sequence is equal to a length of the PTRS group, and both are y.

An OCC sequence used by the terminal device is related to an identifier (identifier, ID) of the terminal device. The terminal device may perform a modulo operation on the length y of the PTRS group based on the ID of the terminal device, and determine the OCC sequence based on a modulo operation result. Because IDs of different terminal devices are different, modulo operation results of the different terminal devices are different. In this way, the terminal devices with different modulo operation results may use different OCC sequences. A correspondence between modulo operation results and OCC sequences is shown in Table 2.

Table 2

| $N_{RNTI}$ | y=2 [w(0) w(1)] | y=4 [w(0) w(1) w(2) w(3)] |
|---|---|---|
| 0 | [+1 +1] | [+1 +1 +1 +1] |
| 1 | [+1 -1] | [+1 -1 +1 -1] |
| 2 | - | [+1 +1 -1 -1] |

(continued)

| N_RNTI | y=2 [w(0) w(1)] | y=4 [w(0) w(1) w(2) w(3)] |
|--------|-----------------|---------------------------|
| 3 | - | [+1 -1 -1 +1] |

The ID of the terminal device may be a cell-radio network temporary identifier (C-RNTI) of the terminal device, and is denoted as $N_{RNTI}$.

The foregoing describes the time domain signal mapping rule for a single PTRS port with reference to FIG. 3. When performing uplink transmission by using a DFT-s-OFDM waveform, the terminal device may simultaneously send the uplink data and the PTRS signal to the network device according to the time domain signal mapping rule for a single PTRS port. To improve performance of the transmission by using the DFT-s-OFDM waveform, the terminal device may increase a quantity of transmitted data stream from a single stream to two streams. After the quantity of data streams is increased to two, different data streams may experience different phase noise. Therefore, different PTRS ports need to be used, in other words, a plurality of PTRS ports are used for measurement of phase noise experienced by different data streams. However, when the DFT-s-OFDM waveform is used, how to design a time domain signal mapping rule for a plurality of PTRS ports is an urgent problem to be resolved.

In view of this, embodiments of this application provide a data transmission method and a related apparatus. The method provides generation of PTRS signals and a time domain signal mapping rule that correspond to a plurality of PTRS ports. Before the time domain signal mapping rule for the plurality of PTRS ports provided in embodiments of this application is described, the following descriptions are first provided.

In embodiments of this application, terms such as "first" and "second" are used to distinguish between same items or similar items with a basically same function and role, and a sequence of the same items or similar items is not limited. A person skilled in the art may understand that the terms such as "first" and "second" do not limit a quantity or an execution sequence, and the terms such as "first" and "second" do not indicate a definite difference.

It should be noted that in this application, terms such as "example" or "for example" are used to represent giving an example, an illustration, or a description. Any embodiment or design scheme described as an "example" or "for example" in this application should not be explained as being more preferred or having more advantages than another embodiment or design scheme. Exactly, use of the term "example", "for example", or the like is intended to present a relative concept in a specific manner.

In addition, "at least one" means one or more, and "a plurality of" means two or more. The term "and/or" describes an association relationship between associated objects and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces) "or a similar expression thereof means any combination of these items, including any combination of a singular item (piece) or plural items (pieces). For example, at least one of a, b, and c may represent a, or b, or c, or a and b, or a and c, or b and c, or a, b, and c, where a, b, and c may be singular or plural.

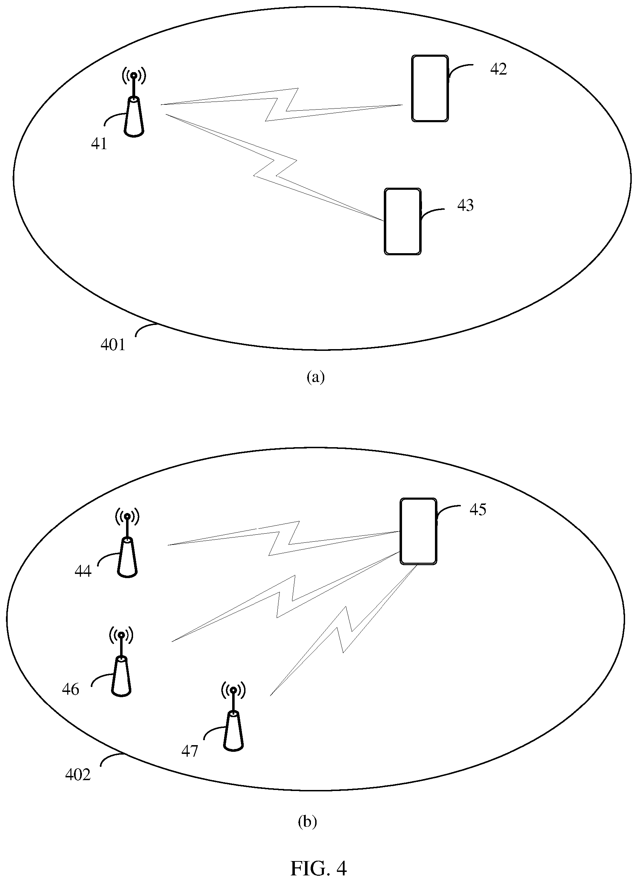

FIG. 4 is a diagram of a communication system according to an embodiment of this application.

As shown in (a) in FIG. 4, a communication system 401 includes a network device 41 and a terminal device 42. Optionally, the communication system 401 further includes a terminal device 43. The network device may transmit data or control signaling to a single terminal device (for example, the terminal device 42) or a plurality of terminal devices (for example, the terminal device 42 and the terminal device 43).

As shown in (b) in FIG. 4, a communication system 402 includes a network device 44 and a terminal device 45. Optionally, the communication system 402 further includes a network device 46 and a network device 47. The network device 44, the network device 46, and the network device 47 may simultaneously transmit data or control signaling to the terminal device 45.

The technical solutions in embodiments of this application are applied to a communication system having the architecture shown in (a) in FIG. 4 or (b) in FIG. 4. Examples of communication systems are as follows: a global system for mobile communications (global system for mobile communications, GSM) system, a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) system, or a future evolved communication system, vehicle-to-everything (vehicle-to-X V2X), where V2X may include vehicle to network (vehicle to network, V2N), vehicle to vehicle (vehicle to vehicle, V2V), vehicle to infrastructure (vehicle to infrastructure, V2I), vehicle to pedestrian (vehicle to pedestrian, V2P), or the like, a long term evolution-vehicle (long term evolution-vehicle, LTE-V), the Internet of Vehicles, machine type communication (machine type communication, MTC), the Internet of Things (IoT), a long term evolution-machine (long term evolution-machine, LTE-M), machine to machine (M2M), device to device (device to device, D2D), and the like.

The terminal device in embodiments of this application may be user equipment, an access terminal, a subscriber unit, a subscriber station, a mobile station, a remote station, a remote terminal, a mobile device, a user terminal, a wireless communication device, a user agent, or a user apparatus. A terminal in embodiments of this application may be a mobile phone (mobile phone), a tablet computer (pad), a computer with a wireless transceiver function, a virtual reality (virtual reality, VR) terminal, an augmented reality (augmented reality, AR) terminal, a mixed reality (mixed reality, MR) terminal, an extended reality (extended reality, XR) terminal, a holographic display terminal, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, or another processing device connected to a wireless modem, a vehicle-mounted device, a wearable device, a terminal in a 5G network, a terminal in a future evolved network, or the like.

The wearable device may also be referred to as a wearable intelligent device, and is a general term of wearable devices, such as glasses, gloves, watches, clothes, and shoes, that are developed by applying wearable technologies to intelligent designs of daily wear. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement all or a part of functions without depending on smartphones, for example, smart watches or smart glasses, and include devices that focus on only one type of application function and need to collaboratively work with other devices such as smartphones, for example, various smart bands or smart jewelry for monitoring physical signs.

In addition, the terminal device may alternatively be a terminal device in an internet of things (internet of things, IoT) system. The IoT is an important part of future information technology development. A main technical feature of the IoT is to connect things to a network by using a communication technology, to implement an intelligent network for human-machine interconnection and thing-thing interconnection. A specific form of the terminal device is not limited in this application.

It should be understood that, in embodiments of this application, the terminal device may be an apparatus configured to implement a function of the terminal device, or may be an apparatus, for example, a chip system, that can support the terminal device in implementing the function. The apparatus may be mounted in a terminal. In this embodiment of this application, the chip system may include a chip, or may include a chip and another discrete component.

The network device in embodiments of this application is an apparatus deployed in a radio access network to provide a wireless communication function for the terminal device. The network device may include various forms of macro base stations, micro base stations (also referred to as small cells), relay stations, access points, and the like. In systems using different radio access technologies, names of network devices may be different, for example, a base transceiver station (base transceiver station, BTS) in a global system for mobile communications (global system for mobile communications, GSM) or a code division multiple access (code division multiple access, CDMA) network, an NB (NodeB) in wideband code division multiple access (wideband code division multiple access, WCDMA), and an eNB or an eNodeB (Evolutional NodeB) in LTE. The network device may alternatively be a radio controller in a cloud radio access network (cloud radio access network, CRAN) scenario. Alternatively, the network device may be a base station device in a future 5G network or a network device in a future evolved PLMN network. The network device may alternatively be a wearable device or a vehicle-mounted device. Alternatively, the network device may be a transmission reception point (transmission and reception point, TRP).

It should be understood that, in embodiments of this application, the network device may be an apparatus configured to implement a function of the network device, or may be an apparatus, for example, a chip system, that can support the network device in implementing the function. The apparatus may be mounted in the network device.

It should be further understood that the network device and the terminal device in embodiments of this application may be deployed on land, including indoor or outdoor, handheld or vehicle-mounted; or deployed on water; or deployed on an airplane, a balloon, or a satellite in air. Application scenarios of the network device and the terminal device are not limited in embodiments of this application.

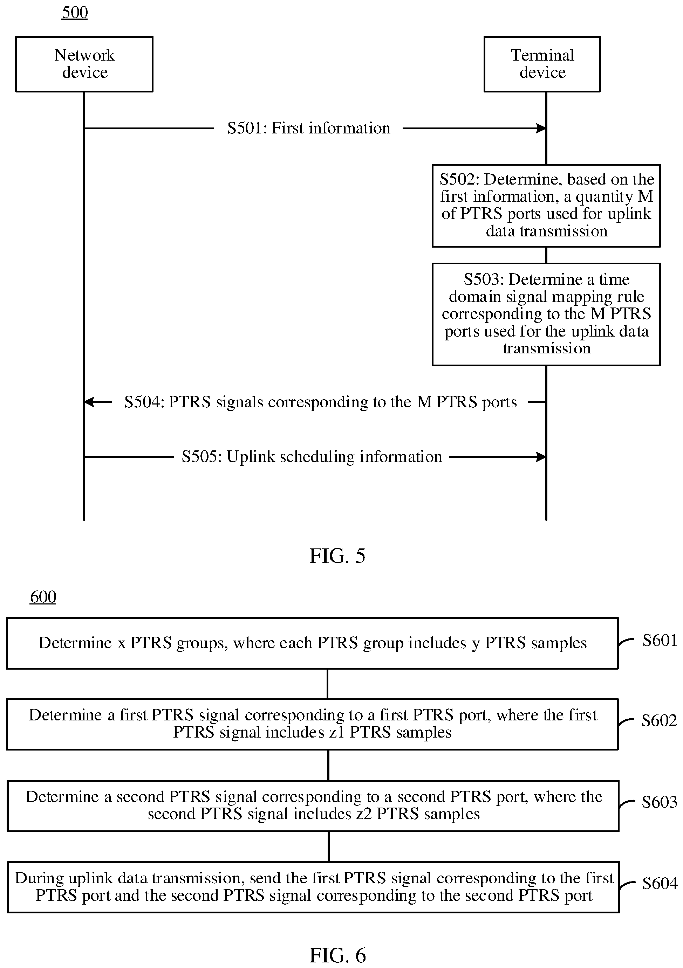

FIG. 5 is a schematic flowchart of a data transmission method 500 according to an embodiment of this application. Steps of the method 500 are performed by a network device and a terminal device through interaction. The method 500 includes S501 to S505. Specific steps are as follows.

S501: The network device sends first information to the terminal device, where the first information is for configuring a waveform corresponding to uplink data transmission, a transmission mode used for the uplink data transmission, and a maximum quantity N of PTRS ports used for the uplink data transmission. Correspondingly, the terminal device receives the first information.

Optionally, the first information is configuration information carried in RRC signaling.

The waveform corresponding to the uplink data transmission includes a DFT-s-OFDM waveform or a CP-OFDM waveform.

The transmission mode used for the uplink data transmission includes at least one or more of a first transmission mode, a second transmission mode, or a third transmission mode. The following describes the three transmission modes.

First transmission mode: The terminal device sends a same data stream of a same transport block (TB) separately via two uplink beams/antenna panels/precoding parameters/codebooks. In other words, the terminal device sends two parts of signals respectively via two uplink beams/antenna panels/precoding parameters/codebooks, and the two parts of signals are completely the same. In other words, the terminal device repeatedly sends completely same signals via two independent uplink beams/antenna panels/precoding parameters/codebooks. This transmission mode helps improve signal strength.

Optionally, when the waveform used for the uplink data transmission is configured as the DFT-s-OFDM waveform, at most a single data stream is transmitted in the first transmission mode.

Second transmission mode: The terminal device sends different data streams of a same TB separately via two uplink beams/antenna panels/precoding parameters/codebooks. In other words, the terminal device sends the different data streams of the same TB via two independent uplink beams/antenna panels/precoding parameters/codebooks. This transmission mode facilitates transmission of a larger TB.

Optionally, when the waveform used for the uplink data transmission is configured as the DFT-s-OFDM waveform, at most two data streams are transmitted in the second transmission mode. When two data streams are transmitted, each uplink beam/antenna panel/precoding parameter/codebook is used for sending one data stream.

Third transmission mode: The terminal device sends data streams of two different TBs respectively via two uplink beams/antenna panels/precoding parameters/codebooks. In other words, the terminal device sends two independent TBs via two independent uplink beams/antenna panels/precoding parameters/codebooks. This transmission mode facilitates transmission of more TBs. Transmission of two TBs may be scheduled by using two pieces of independent downlink control information (downlink control information, DCI), the two pieces of DCI may be carried in two independent physical downlink control channels (physical downlink control channels, PDCCHs), and the two PDCCHs may be separately associated with one control resource set pool index (control resource set pool index).

Optionally, when the waveform used for the uplink data transmission is configured as the DFT-s-OFDM waveform, each TB includes at most a single data stream in the third transmission mode.

S502: The terminal device determines, based on the first information, a quantity M of PTRS ports used for the uplink data transmission.

When the waveform used for the uplink data transmission is configured as the DFT-s-OFDM waveform, and the maximum quantity of PTRS ports used for the uplink data transmission is N, the terminal device may determine, based on the transmission mode, the quantity M of PTRS ports used for the uplink data transmission. Specifically, the following three cases are included.

Case 1: If the waveform used for the uplink data transmission is configured as the DFT-s-OFDM waveform, N=2, and the transmission mode is the first transmission mode, M=1.

Case 2: If the waveform used for the uplink data transmission is configured as the DFT-s-OFDM waveform, N=2, and the transmission mode is the second transmission mode, M=2.

Case 3: If the waveform used for the uplink data transmission is configured as the DFT-s-OFDM waveform, N=2, and the transmission mode is the third transmission mode, M=2.

S503: The terminal device determines a time domain signal mapping rule corresponding to the M PTRS ports used for the uplink data transmission.

Determining the time domain signal mapping rule corresponding to the M PTRS ports used for the uplink data transmission may also be understood as determining time domain signal positions of PTRS signals corresponding to the M PTRS ports, or determining PTRS sampling points corresponding to the M PTRS ports. In other words, the time domain signal positions of the PTRS signals and the PTRS sampling points may be interchangeable.

S504: The terminal device sends the PTRS signals corresponding to the M PTRS ports to the network device.

Optionally, the method 500 further includes S505: The network device sends uplink scheduling information (for example, DCI) to the terminal device. The uplink scheduling information indicates scheduling information for the uplink data transmission, and includes at least one or more of a time-frequency resource used for the uplink data transmission, a quantity of data streams for the uplink data transmission, or precoding information used for the uplink data transmission.

For Case 2 in S502, the terminal device may further determine, based on the quantity of data streams for the uplink data transmission, the waveform used by the terminal device for the uplink data transmission. Details are as follows.

When the waveform used for the uplink data transmission is configured as the DFT-s-OFDM waveform, N=2, and the transmission mode is the second transmission mode, if the quantity of data streams for the uplink data transmission is equal to 2, the waveform used by the terminal device for the uplink data transmission is the DFT-s-OFDM waveform, the quantity M of PTRS ports used for the uplink data transmission is equal to 2.

When the waveform used for the uplink data transmission is configured as the DFT-s-OFDM waveform, N=2, and the transmission mode is the second transmission mode, if the quantity of data streams for the uplink data transmission is greater than 2, the waveform used by the terminal device for the uplink data transmission is the CP-OFDM waveform. In other words, in this case, even if the waveform configured by the network device for the terminal device is the DFT-s-OFDM waveform, provided that the terminal device uses the second transmission mode, N=2, and the quantity of data streams for the uplink data transmission is greater than 2, the terminal device needs to use the CP-OFDM waveform for the uplink data transmission, and the quantity M of PTRS ports used for the uplink data transmission is equal to 2.

In other words, when the waveform is configured as the DFT-s-OFDM waveform, when a first condition is satisfied, the terminal device sends uplink data by using the CP-OFDM waveform. The first condition includes one or a combination of the following:

The second transmission mode is used for the uplink data transmission;

the maximum quantity of PTRSs used for the uplink data transmission is 2; and
a quantity of streams used for the uplink data transmission is greater than 2.

In the foregoing method, "when the waveform is configured as the DFT-s-OFDM waveform" may alternatively be replaced with "when the waveform is configured as a dynamic waveform." The dynamic waveform means that a waveform used for the uplink transmission is not a fixed waveform configured by using RRC, but may be dynamically indicated based on DCI or a medium access control-control element (medium access control-control element, MAC-CE), or may be dynamically determined according to some rules, for example, a rule corresponding to the first condition.

With reference to FIG. 6 to FIG. 15, the following describes that the terminal device determines a time domain signal mapping rule corresponding to the M PTRS ports used for the uplink data transmission in S503.

As shown in Case 1 in S502, the terminal device determines that the quantity M of PTRS ports used for the uplink data transmission is equal to 1. In this case, the terminal device may determine, based on the time domain signal mapping rule for a single PTRS port described with reference to FIG. 3, a time domain signal position of a PTRS signal corresponding to the single PTRS port. Details are not described herein again.

As shown in Case 2 or Case 3 in S502, the terminal device determines that the quantity M of PTRS ports used for the uplink data transmission is equal to 2. The following specifically describes an implementation of determining time domain signal positions of PTRS signals corresponding to the two PTRS ports. For ease of descriptions, the two PTRS ports are respectively referred to as a first PTRS port and a second PTRS port in embodiments of this application.

FIG. 6 is a schematic flowchart of another data transmission method 600 according to an embodiment of this application. The method 600 is applied to a terminal device, and describes a process in which the terminal device determines a time domain signal position of a first PTRS signal corresponding to a first PTRS port and a time domain signal position of a second TPRS signal corresponding to a second PTRS port. The method 600 includes S601 to S604, and specific steps are as follows.

S601: Determine x PTRS groups, where each PTRS group includes y PTRS samples, and x and y are integers greater than or equal to 2.

The terminal device divides a PTRS signal sequence into x PTRS groups, and each PTRS group includes y PTRS samples. In other words, a PTRS signal sequence with a length of x*y is equally divided into x parts, each part includes y PTRS samples, and a quantity of PTRS samples included in each PTRS group is a length of the PTRS group. In this embodiment of this application, a length of each PTRS group is y. The terminal device may determine values of x and y based on Table 1. Details are not described herein again.

S602: Determine the first PTRS signal corresponding to the first PTRS port, where the first PTRS signal includes z1 PTRS samples.

S603: Determine the second PTRS signal corresponding to the second PTRS port, where the second PTRS signal includes z2 PTRS samples.

z1 and z2 are positive integers, and a sum of z1 and z2 is equal to a product of x and y.

S604: During uplink data transmission, send the first PTRS signal corresponding to the first PTRS port and the second PTRS signal corresponding to the second PTRS port.

The method 600 relates to two implementations of determining time domain signal positions of the first PTRS signal and the second PTRS signal, and details are as follows.

Implementation 1: The z1 PTRS samples include a PTRS sample included in x1 PTRS groups, the z2 PTRS samples include a PTRS sample included in x2 PTRS groups, and x1+x2=x.

In this implementation, the terminal device allocates the x PTRS groups to the first PTRS port and the second PTRS port. In other words, the first PTRS port occupies a time domain signal position corresponding to the x1 PTRS groups, and the second PTRS port occupies a time domain signal position corresponding to the x2 PTRS groups.

Optionally, x is an even number, x1=x/2, and x2=x/2. To be specific, the two PTRS ports each occupy half of the PTRS groups and a time domain signal position corresponding to the half of the PTRS groups.

For example, the x1 PTRS groups occupied by the first PTRS port include a first half of the x PTRS groups, and the x2 PTRS groups occupied by the second PTRS port include a second half of the PTRS groups; or the x1 PTRS groups occupied by the first PTRS port include a second half of the x PTRS groups, and the x2 PTRS groups occupied by the second PTRS port include a first half of the PTRS groups.

For example, the x1 PTRS groups occupied by the first PTRS port include an odd-numbered PTRS group in the x PTRS groups, and the x2 PTRS groups occupied by the second PTRS port include an even-numbered PTRS group in the x PTRS groups; or the x1 PTRS groups occupied by the first PTRS port include an even-numbered PTRS group in the x PTRS groups, and the x2 PTRS groups occupied by the second PTRS port include an odd-numbered PTRS group in the x PTRS groups.

Optionally, x is an odd number, x1=(x+1)/2, and x2=(x-1)/2. To be specific, the first PTRS port occupies time domain signal positions corresponding to (x+1)/2 PTRS groups in the x PTRS groups, and the second PTRS port occupies time domain signal positions corresponding to (x-1)/2 PTRS groups in the x PTRS groups. Alternatively, x1=(x-1)/2, and x2=(x+1)/2. To be specific, the first PTRS port occupies time domain signal positions corresponding to (x-1)/2 PTRS groups in the x PTRS groups, and the second PTRS port occupies time domain signal positions corresponding to (x+1)/2 PTRS groups in the x PTRS groups.

Optionally, when a same quantity of RBs are used for the uplink data transmission, x is equal to twice a quantity of PTRS groups corresponding to sending a PTRS signal by the terminal device through a single PTRS port. In other words, when transmitting the PTRS signals through the two PTRS ports, the terminal device may double the quantity of PTRS groups, so that a quantity of PTRS groups corresponding to each PTRS port is consistent with that in a conventional technology, thereby ensuring that phase noise estimation performance of each PTRS port does not deteriorates as a quantity of ports increases.

As shown in Table 3, when quantities of RBs are the same, a quantity of PTRS groups corresponding to sending the PTRS signals through the two PTRS ports is twice the quantity of PTRS groups corresponding to sending the PTRS signal through the single PTRS port. In this way, after the x PTRS groups are equally allocated to the two PTRS ports, a quantity of PTRS groups occupied by each PTRS port is the same as the quantity of PTRS groups occupied by the single PTRS port shown in Table 1.

Table 3

| Quantity of RBs | Single PTRS port: Quantity x of PTRS groups | Two PTRS ports: Quantity x of PTRS groups | y |
|---|---|---|---|
| $N_{RB0} \leq N_{RB} < N_{RB1}$ | 2 | 4 | 2 |
| $N_{RB1} \leq N_{RB} < N_{RB2}$ | 2 | 4 | 4 |
| $N_{RB2} \leq N_{RB} < N_{RB3}$ | 4 | 8 | 2 |
| $N_{RB3} \leq N_{RB} < N_{RB4}$ | 4 | 8 | 4 |
| $N_{RB4} \leq N_{RB}$ | 8 | 16 | 4 |

It can be learned by comparing Table 3 with Table 1 that, combinations of x and y corresponding to the two PTRS ports in Table 3 include combinations of x and y that are not included in combinations of x and y corresponding to the single PTRS port in Table 1, for example, x=8 and y=2; and x=16 and y=4. The following separately describes time domain signal mapping rules that are of PTRS signals and that correspond to the two combinations.

(1) When x=8 and y=2, the terminal device may determine a time domain signal position of a PTRS signal by using the following formula:

$$m = \lfloor s \times M / 16 \rfloor + k - 1,$$

$$s = 1,3,5,7,9,11,13,15, \ k=0,1.$$

m represents a number of the time domain signal position occupied by the PTRS signal, M is a length of an entire time domain signal (including an uplink data signal and the PTRS signal), and $\lfloor \cdot \rfloor$ is a rounding-down symbol. In the foregoing formula, s may alternatively be outside the rounding-down symbol. The rounding-down symbol $\lfloor \cdot \rfloor$ in the foregoing formula may alternatively be replaced with a rounding-up symbol, or may be removed, that is, rounding-up or rounding-down is not needed.

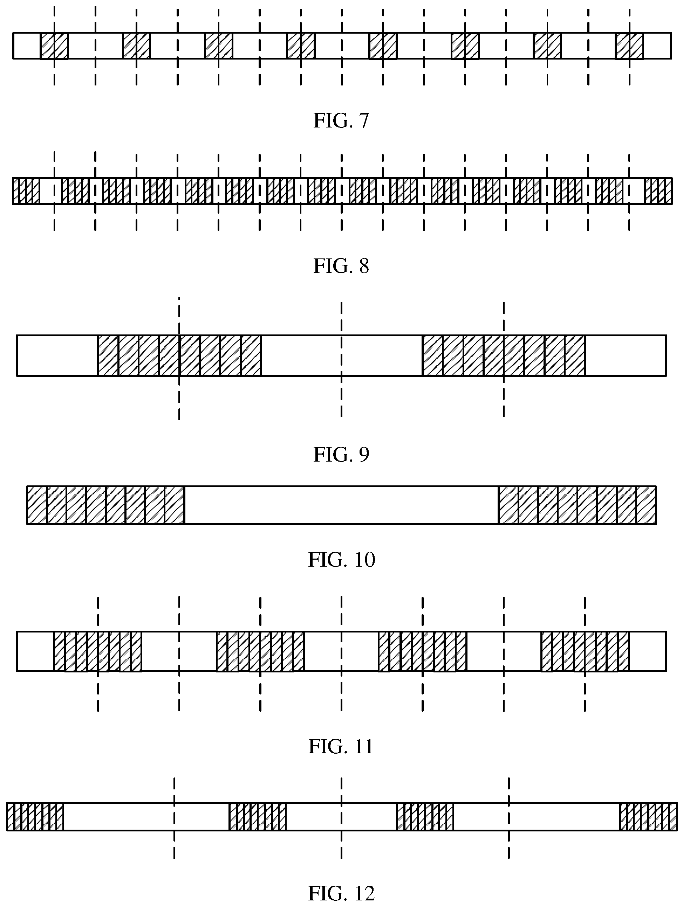

FIG. 7 is a diagram of still another PTRS signal mapping according to an embodiment of this application. A physical meaning of the foregoing formula is shown in FIG. 7. An entire time domain signal is equally divided into 16 parts, and eight PTRS groups respectively occupy a last time domain signal position in a first part of the time domain signal and a first time domain signal position in a second part of the time domain signal, a last time domain signal position in a third part of the time domain signal and a first time domain signal position in a fourth part of the time domain signal, a last time domain signal position in a fifth part of the time domain signal and a first time domain signal position in a sixth part of the time domain signal, a last time domain signal position in a seventh part of the time domain signal and a first time domain signal position in an eighth part of the time domain signal, a last time domain signal position in a ninth part of the time domain signal and a first time domain signal position in a tenth part of the time domain signal, a last time domain signal position in an eleventh part of the time domain signal and a first time domain signal position in a twelfth part of the time domain signal, a last time domain signal position in a thirteenth part of the time domain signal and a first time domain signal position in a fourteenth part of the time domain signal, and a last time domain signal position in a fifteenth part of the time domain signal and a first time domain signal position in a sixteenth part of the time domain signal.

(2) When x=16 and y=4, the terminal device may determine the time domain signal position of the PTRS signal by using the following formula:

$$m = \lfloor s \times M / 16 \rfloor + n + k,$$

$$s = 0, \ k=0,1,2,3, \ n=0;$$

$$s = 1,2,3,4,5,6,7,8,9,10,11,12,13,14, \ k=-2,-1,0,1, \ n=\lfloor s \times M / 32 \rfloor;$$

$$s = 16, \ k=-4,-3,-2,-1, \ n=0$$

m represents a number of the time domain signal position occupied by the PTRS signal, M is the length of the entire time domain signal (including the uplink data signal and the PTRS signal), and $\lfloor \cdot \rfloor$ is a rounding-down symbol. In the foregoing formula, s may alternatively be outside the rounding-down symbol. The rounding-down symbol $\lfloor \cdot \rfloor$ in the foregoing formula may alternatively be replaced with a rounding-up symbol, or may be removed, that is, rounding-up or rounding-down is not needed.

FIG. 8 is still yet another diagram of PTRS signal mapping according to an embodiment of this application. A physical meaning of the foregoing formula is shown in FIG. 8. An entire time domain signal is equally divided into 16 parts, and 16 PTRS groups respectively occupy first four time domain signal positions in a first part of the time domain signal, intermediate four time domain signal positions in a second part of the time domain signal, intermediate four time domain signal positions in a third part of the time domain signal, intermediate four time domain signal positions in a fourth part of the time domain signal, intermediate four time domain signal positions in a fifth part of the time domain signal, intermediate four time domain signal positions in a sixth part of the time domain signal, intermediate four time domain signal positions in a seventh part of the time domain signal, and intermediate four time domain signal positions in an eighth part of the time domain signal, intermediate four time domain signal positions in a ninth part of the time domain signal, intermediate four time domain signal positions in a tenth part of the time domain signal, intermediate four time domain signal positions in an eleventh part of the time domain signal, intermediate four time domain signal positions in a twelfth part of the time domain signal, intermediate four time domain signal positions in a thirteenth part of the time domain signal, intermediate four time domain signal positions in a fourteenth part of the time domain signal, intermediate four time domain signal positions in a fifteenth part of the time domain signal, and last four time domain signal positions in a sixteenth part of the time domain signal.

Implementation 2: The z1 PTRS samples include a first part of PTRS samples in each of the x PTRS groups, the z2 PTRS samples include a second part of PTRS samples in each of the x PTRS groups, and the first part of PTRS samples and the second part of PTRS samples are two parts of PTRS samples included in one PTRS group.

In this implementation, the terminal device allocates the first part of the PTRS samples in each PTRS group to the first PTRS port, and allocates the second part of the PTRS samples in each PTRS group to the second PTRS port. In other words, the first PTRS port occupies the first part of the PTRS samples in each PTRS group, and the second PTRS port occupies the second part of the PTRS samples in each PTRS group.

Optionally, y is an even number, a quantity of the first part of PTRS samples is y1, a quantity of the second part of PTRS samples is y2, and y1+y2=y. In other words, the first PTRS port occupies y1 PTRS samples in each PTRS group, and the second PTRS port occupies y2 PTRS samples in each PTRS group.

For example, the first PTRS port occupies first y1 PTRS samples in each PTRS group, and the second PTRS port occupies last y2 PTRS samples in each PTRS group; or the first PTRS port occupies last y2 PTRS samples in each PTRS group, and the second PTRS port occupies first y1 PTRS samples in each PTRS group. y1 may be equal to y2, that is, y1=y2=y/2. Optionally, y is an odd number, y1=(y+1)/2, and y2=(y-1)/2, or y1=(y-1)/2, and y2=(y+1)/2.

For example, the first PTRS port occupies an odd-numbered PTRS sample in each PTRS group, and the second PTRS port occupies an even-numbered PTRS sample in each PTRS group; or the first PTRS port occupies an even-numbered PTRS sample in each PTRS group, and the second PTRS port occupies an odd-numbered PTRS sample in each PTRS group.

Optionally, when a same quantity of RBs are used for the uplink data transmission, y is equal to twice a quantity of PTRS samples in a PTRS group corresponding to sending a PTRS signal by the terminal device through a single PTRS port. In other words, when transmitting the PTRS signals through the two PTRS ports, the terminal device may double the quantity of PTRS samples in the PTRS group, so that a quantity of PTRS samples corresponding to the two PTRS ports is consistent with that in a conventional technology, thereby ensuring that phase noise estimation performance of each PTRS port does not deteriorate as a quantity of ports increases.

As shown in Table 4, when quantities of RBs are the same, the quantity of PTRS samples in the PTRS group corresponding to sending the PTRS signals through the two PTRS ports is twice the quantity of PTRS samples in the PTRS group corresponding to sending the PTRS signal through the single PTRS port. In this way, after the PTRS samples in the PTRS group are equally allocated to the two PTRS ports, a quantity of PTRS samples in the PTRS group occupied by each PTRS port is the same as the quantity of PTRS samples in the PTRS group occupied by the single PTRS port shown in Table 1.

Table 4

| Quantity of RBs | x | Single PTRS port: y | Two PTRS ports: y |
|---|---|---|---|
| $N_{RB0} \leq N_{RB} < N_{RB1}$ | 2 | 2 | 4 |
| $N_{RB1} \leq N_{RB} < N_{RB2}$ | 2 | 4 | 8 |
| $N_{RB2} \leq N_{RB} < N_{RB3}$ | 4 | 2 | 4 |
| $N_{RB3} \leq N_{RB} < N_{RB4}$ | 4 | 4 | 8 |
| $N_{RB4} \leq N_{RB}$ | 8 | 4 | 8 |

It can be learned by comparing Table 4 with Table 1 that, combinations of x and y corresponding to the two PTRS ports in Table 4 include combinations of x and y that are not included in combinations of x and y corresponding to the single PTRS port in Table 1, for example, x=2 and y=8; x=4 and y=8; and x=8 and y=8. The following separately describes time domain signal mapping rules that are of PTRS signals and that correspond to the three combinations.

(1) When x=2 and y=8, the terminal device may determine a time domain signal position of a PTRS signal by using the following formula:

$$m = \lfloor s \times M / 4 \rfloor + k,$$

$$s = 1,3, \quad k = -4,-3,-2,-1,0,1,2,3$$

m represents a number of the time domain signal position occupied by the PTRS signal, M is a length of an entire time domain signal (including an uplink data signal and the PTRS signal), and $\lfloor \cdot \rfloor$ is a rounding-down symbol. In the foregoing formula, s may alternatively be outside the rounding-down symbol. The rounding-down symbol $\lfloor \cdot \rfloor$ in the foregoing formula may alternatively be replaced with a rounding-up symbol, or may be removed, that is, rounding-up or rounding-down is not needed.

FIG. 9 is still yet another diagram of PTRS signal mapping according to an embodiment of this application. A physical meaning of the foregoing formula is shown in FIG. 9. An entire time domain signal is divided into four parts, and two

**EP 4 629 544 A1**

PTRS groups respectively occupy last four time domain signal positions in a first part of the PTRS time domain signal and first four time domain signal positions in a second part of the PTRS time domain signal, and last four time domain signal positions in a third part of the PTRS time domain signal and first four time domain signal positions in a fourth part of the time domain signal.

(2) When x=2 and y=8, the terminal device may further determine the time domain signal position of the PTRS signal by using the following formula:

$$m = s \times M + k,$$

$$s=0, \ k=0,1,2,3,4,5,6,7;$$

$$s=1, \ k=-8,-7,-6,-5,-4,-3,-2,-1$$

m represents a number of the time domain signal position occupied by the PTRS signal, and M is the length of the entire time domain signal (including the uplink data signal and the PTRS signal).

FIG. 10 is still yet another diagram of PTRS signal mapping according to an embodiment of this application. A physical meaning of the foregoing formula is shown in FIG. 10. Two PTRS groups respectively occupy first eight time domain signal positions and last eight time domain signal positions.

(3) When x=4 and y=8, the terminal device may determine the time domain signal position of the PTRS signal by using the following formula:

$$m = \lfloor s \times M / 8 \rfloor + k,$$

$$s=1,3,5,7, \ k=-4,-3,-2,-1,0,1,2,3$$

m represents a number of the time domain signal position occupied by the PTRS signal, M is the length of the entire time domain signal (including the uplink data signal and the PTRS signal), and $\lfloor \cdot \rfloor$ is a rounding-down symbol. In the foregoing formula, s may alternatively be outside the rounding-down symbol. The rounding-down symbol $\lfloor \cdot \rfloor$ in the foregoing formula may alternatively be replaced with a rounding-up symbol, or may be removed, that is, rounding-up or rounding-down is not needed.

FIG. 11 is still yet another diagram of PTRS signal mapping according to an embodiment of this application. A physical meaning of the foregoing formula is shown in FIG. 11. An entire time domain signal is equally divided into eight parts, and four PTRS groups respectively occupy last four time domain signal positions in a first part of the time domain signal and first four time domain signal positions in a second part of the time domain signal, last four time domain signal positions in a third part of the time domain signal and first four time domain signal positions in a fourth part of the time domain signal, last four time domain signal positions in a fifth part of the time domain signal and first four time domain signal positions in a sixth part of the time domain signal, and last four time domain signal positions in a seventh part of the time domain signal and first four time domain signal positions in an eighth part of the time domain signal.

(4) When x=4 and y=8, the terminal device may further determine the time domain signal position of the PTRS signal by using the following formula:

$$m = \lfloor s \times M / 4 \rfloor + n + k,$$

$$s=0, \ k=0,1,2,3,4,5,6,7, \ n=0;$$

$$s=1,2, \ k=-4,-3,-2,-1,0,1,2,3, \ n=\lfloor s \times M / 8 \rfloor;$$

$$s=4, \ k=-8,-7,-6,-5,-4,-3,-2,-1, \ n=0$$

m represents a number of the time domain signal position occupied by the PTRS signal, M is the length of the entire time domain signal (including the uplink data signal and the PTRS signal), and $\lfloor \cdot \rfloor$ is a rounding-down symbol. In the foregoing formula, s may alternatively be outside the rounding-down symbol. The rounding-down symbol $\lfloor \cdot \rfloor$ in the foregoing formula may alternatively be replaced with a rounding-up symbol, or may be removed, that is, rounding-up or rounding-down is not needed.

FIG. 12 is still yet another diagram of PTRS signal mapping according to an embodiment of this application. A physical meaning of the foregoing formula is shown in FIG. 12. An entire time domain signal is equally divided into four parts, and four PTRS groups respectively occupy first eight time domain signal positions in a first part of the time domain signal, intermediate eight time domain signal positions in a second part of the time domain signal, intermediate eight time domain signal positions in a third part of the time domain signal, and last eight time domain signal positions in a fourth part of the time domain signal.

(5) When x=8 and y=8, the terminal device may determine the time domain signal position of the PTRS signal by using the following formula:

$$m = \lfloor s \times M / 16 \rfloor + k,$$

$$s=1,3,5,7,9,11,13,15, \quad k=-4,-3,-2,-1,0,1,2,3 \quad .$$

m represents a number of the time domain signal position occupied by the PTRS signal, M is the length of the entire time domain signal (including the uplink data signal and the PTRS signal), and $\lfloor \cdot \rfloor$ is a rounding-down symbol. In the foregoing formula, s may alternatively be outside the rounding-down symbol. The rounding-down symbol $\lfloor \cdot \rfloor$ in the foregoing formula may alternatively be replaced with a rounding-up symbol, or may be removed, that is, rounding-up or rounding-down is not needed.

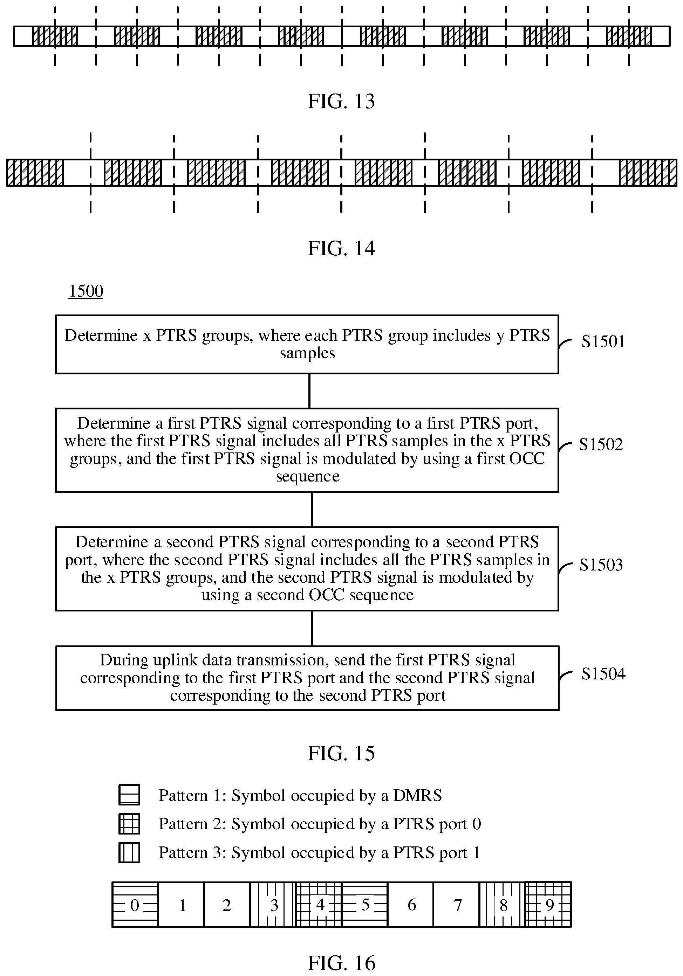

FIG. 13 is still yet another diagram of PTRS signal mapping according to an embodiment of this application. A physical meaning of the foregoing formula is shown in FIG. 13. An entire time domain signal is equally divided into 16 parts, and eight PTRS groups respectively occupy last four time domain signal positions in a first part of the time domain signal and first four time domain signal positions in a second part of the time domain signal, last four time domain signal positions in a third part of the time domain signal and first four time domain signal positions in a fourth part of the time domain signal, last four time domain signal positions in a fifth part of the time domain signal and first four time domain signal positions in a sixth part of the time domain signal, last four time domain signal positions in a seventh part of the time domain signal and first four time domain signal positions in an eighth part of the time domain signal, last four time domain signal positions in a ninth part of the time domain signal and first four time domain signal positions in a tenth part of the time domain signal, last four time domain signal positions in an eleventh part of the time domain signal and first four time domain signal positions in a twelfth part of the time domain signal, last four time domain signal positions in a thirteenth part of the time domain signal and first four time domain signal positions in a fourteenth part of the time domain signal, and last four time domain signal positions in a fifteenth part of the time domain signal and first four time domain signal positions in a sixteenth part of the time domain signal.

(6) When x=8 and y=8, the terminal device may further determine the time domain signal position of the PTRS signal by using the following formula:

$$m = \lfloor s \times M / 8 \rfloor + n + k,$$

$$s=0, \quad k=0,1,2,3,4,5,6,7, \quad n=0;$$

$$s=1,2,3,4,5,6, \quad k=-4,-3,-2,-1,0,1,2,3, \quad n=\lfloor s \times M / 8 \rfloor ; \quad .$$

$$s=8, \quad k=-8,-7,-6,-5,-4,-3,-2,-1, \quad n=0$$

m represents a number of the time domain signal position occupied by the PTRS signal, M is the length of the entire time domain signal (including the uplink data signal and the PTRS signal), and $\lfloor \cdot \rfloor$ is a rounding-down symbol. In the foregoing formula, s may alternatively be outside the rounding-down symbol. The rounding-down symbol $\lfloor \cdot \rfloor$ in the foregoing formula may alternatively be replaced with a rounding-up symbol, or may be removed, that is, rounding-up or rounding-down is not needed.

FIG. 14 is still yet another diagram of PTRS signal mapping according to an embodiment of this application. A physical meaning of the foregoing formula is shown in FIG. 14. An entire time domain signal is equally divided into eight parts, and eight PTRS groups respectively occupy first eight time domain signal positions in a first part of the time domain signal, intermediate eight time domain signal positions in a second part of the time domain signal, intermediate eight time domain signal positions in a third part of the time domain signal, intermediate eight time domain signal positions in a fourth part of the time domain signal, intermediate eight time domain signal positions in a fifth part of the time domain signal, intermediate eight time domain signal positions in a sixth part of the time domain signal, and intermediate eight time domain signal positions in a seventh part of the time domain signal, and last eight time domain signal positions in an eighth part of the time domain signal.

In the formulas described in Implementation 1 or Implementation 2, s may be outside the rounding-down symbol, or the rounding-down symbol in the foregoing formulas may not be used, or the rounding-down symbol in the foregoing formulas may be replaced with the rounding-up symbol. This is not limited in embodiments of this application. Other variant formulas derived based on the foregoing formulas fall within the protection scope of embodiments of this application.

The foregoing describes, with reference to Case 2 or Case 3 in S502, two implementations of determining time domain signal positions of the first PTRS signal and the second PTRS signal. Based on FIG. 15, the following describes, with reference to Case 2 or Case 3 in S502, another implementation of determining the time domain signal positions of the first PTRS signal and the second PTRS signal.

FIG. 15 is a schematic flowchart of still another data transmission method 1500 according to an embodiment of this application. The method 1500 is applied to a terminal device, and describes a process in which the terminal device determines a time domain signal position of a first PTRS signal corresponding to a first PTRS port and a time domain signal position of a second TPRS signal corresponding to a second PTRS port. The method 1500 includes S1501 to S1504, and specific steps are as follows.

S1501: Determine x PTRS groups, where each of the x PTRS groups includes y PTRS samples, and x and y are integers greater than or equal to 2.

With reference to the foregoing descriptions, the terminal device may determine values of x and y based on Table 1. Details are not described herein again.

S1502: Determine the first PTRS signal corresponding to the first PTRS port, where the first PTRS signal includes all PTRS samples in the x PTRS groups, and the first PTRS signal is modulated by using a first OCC sequence.

S1503: Determine the second PTRS signal corresponding to the second PTRS port, where the second PTRS signal includes all the PTRS samples in the x PTRS groups, and the second PTRS signal is modulated by using a second OCC sequence.

S1504: During uplink data transmission, send the first PTRS signal corresponding to the first PTRS port and the second PTRS signal corresponding to the second PTRS port.

In this embodiment of this application, the first OCC sequence and the second OCC sequence are two different OCC sequences in y OCC sequences. When the terminal device sends the first PTRS signal through the first PTRS port, and sends the second PTRS signal through the second PTRS port, time domain signal positions in a same PTRS group may be shared, but the first PTRS signal and the second PTRS signal are modulated by using different OCC sequences. In this way, although a time domain resource of the first PTRS signal is the same as a time domain resource of the second PTRS signal, the first PTRS signal is different from the second PTRS signal in code domain. This helps improve resource utilization and implement distinguishing between PTRS signals corresponding to different PTRS ports.

An implementation of determining time domain signal positions of the first PTRS signal and the second PTRS signal in the method 1500 is specifically as follows.

Implementation 3: The terminal device allocates OCC sequences corresponding to the PTRS group to the first PTRS port and the second PTRS port. In other words, the first PTRS port and the second PTRS port occupy all PTRS samples in the same PTRS group and time domain signal positions corresponding to all the PTRS samples, but OCC sequences for modulation are different.

It should be noted that, in this embodiment of this application, a length of the PTRS group is y, and the PTRS group corresponds to y OCC sequences whose length is y. The terminal device may number the y OCC sequences, in other words, each OCC sequence corresponds to one number, and the terminal device may allocate two OCC sequences in the y OCC sequences to the first PTRS port and the second PTRS port.

For example, a number $q_0$ of the first OCC sequence corresponding to the first PTRS port and a number $q_1$ of the second OCC sequence corresponding to the second PTRS port may be calculated by using the following formulas:

$$q_0 = N_{RNTI} \bmod (y/2);$$

and

$$q_1 = N_{RNTI} \bmod (y/2) + (y/2).$$

$N_{RNTI}$ represents a cell-radio network temporary identifier of the terminal device.

The foregoing formula for calculating the number $q_0$ of the first OCC sequence corresponding to the first PTRS port and the foregoing formula for calculating the number $q_1$ of the second OCC sequence corresponding to the second PTRS port may alternatively be expressed as follows:

$$q_i = N_{RNTI} \bmod (y/2) + i*(y/2).$$

A value of i is 0 or 1, corresponding to a PTRS port i. $q_i$ represents a number of an OCC sequence corresponding to the PTRS port i. When i=0, it corresponds to a PTRS port 0, the PTRS port 0 is the first PTRS port, and $q_0$ is the number of the first OCC sequence corresponding to the first PTRS port. When i=1, it corresponds to a PTRS port 1, the PTRS port 1 is the second PTRS port, and $q_1$ is the number of the second OCC sequence corresponding to the second PTRS port.

It can be learned from the foregoing formulas for calculating the number $q_0$ and the number $q_1$ that a difference between numbers of OCC sequences corresponding to the first PTRS port and the second PTRS port is equal to y/2. For example, when y=8, if $N_{RNTI} \bmod (y/2)=0$, $q_0=0$ and $q_1=4$; if $N_{RNTI} \bmod (y/2)=1$, $q_0=1$ and $q_1=5$; if $N_{RNTI} \bmod (y/2)=2$, $q_0=2$ and $q_1=6$; or if $N_{RNTI} \bmod (y/2)=3$, $q_0=3$ and $q_1=7$. In this way, two PTRS ports of different terminal devices may be staggered.

For example, the number $q_0$ of the first OCC sequence corresponding to the first PTRS port and the number $q_1$ of the second OCC sequence corresponding to the second PTRS port may alternatively be calculated by using the following formulas:

$$q_0 = (N_{RNTI} \bmod (y/2))*2;$$

and

$$q_1 = (N_{RNTI} \bmod (y/2))*2 + 1.$$

$N_{RNTI}$ represents a cell-radio network temporary identifier of the terminal device.

The foregoing formula for calculating the number $q_0$ of the first OCC sequence corresponding to the first PTRS port and the foregoing formula for calculating the number $q_1$ of the second OCC sequence corresponding to the second PTRS port may alternatively be expressed as follows:

$$q_i = (N_{RNTI} \bmod (y/2))*2 + i.$$

A value of i is 0 or 1, corresponding to a PTRS port i. $q_i$ represents a number of an OCC sequence corresponding to the PTRS port i. When i=0, it corresponds to a PTRS port 0, the PTRS port 0 is the first PTRS port, and $q_0$ is the number of the first OCC sequence corresponding to the first PTRS port. When i=1, it corresponds to a PTRS port 1, the PTRS port 1 is the second PTRS port, and $q_1$ is the number of the second OCC sequence corresponding to the second PTRS port.

It can be learned from the foregoing formulas for calculating the number $q_0$ and the number $q_1$ that a difference between numbers of OCC sequences corresponding to the first PTRS port and the second PTRS port is equal to 1. For example, when y=8, if $N_{RNTI} \bmod (y/2)=0$, $q_0=0$ and $q_1=1$; if $N_{RNTI} \bmod (y/2)=1$, $q_0=2$ and $q_1=3$; if $N_{RNTI} \bmod (y/2)=2$, $q_0=4$ and $q_1=5$; or if $N_{RNTI} \bmod (y/2)=3$, $q_0=6$ and $q_1=7$.

Optionally, when a same quantity of RBs are used for the uplink data transmission, y is equal to twice a quantity of PTRS samples in a PTRS group corresponding to sending a PTRS signal by the terminal device through a single PTRS port. In other words, when transmitting the PTRS signals through the two PTRS ports, the terminal device may double the quantity of PTRS samples in the PTRS group, so that a quantity of PTRS samples in PTRS groups corresponding to the two PTRS ports is twice the quantity of PTRS samples in the PTRS group corresponding to the single PTRS port. For specific values of x and y, refer to Table 4 described in Implementation 2. Details are not described herein again.

After the quantity of PTRS samples in the PTRS group is doubled, a length of an OCC sequence corresponding to the PTRS group is also doubled. In other words, the length of the OCC sequences of the PTRS group when the two PTRS ports are used is twice the length of the OCC sequence of the PTRS group when the single PTRS port is used. Similarly, in this manner, a new combination of x and y is also introduced, for example, x=2 and y=8; x=4 and y=8; and x=8 and y=8. For time domain signal mapping rules of PTRS signals corresponding to the three combinations, refer to descriptions in Implementation 2. Details are not described herein again.

Based on Case 2 or Case 3 in S502, in addition to determining time domain signal mapping rules for the two PTRS ports by using the foregoing Implementation 1, Implementation 2, or Implementation 3, the terminal device may further determine time domain signal mapping rules for the two PTRS ports by using the following Implementation 4, Implementation 5, or Implementation 6.

Implementation 4: A time domain signal mapping rule for the first PTRS port is the same as the time domain signal mapping rule for the single PTRS port described above, and a time domain signal mapping rule for the second PTRS port is determined based on that of the first PTRS port.

Optionally, a time domain signal position of the second PTRS port may be determined by translating a time domain signal position of the first PTRS port in one direction as a whole. For example, the time domain signal position is translated forward or backward by r positions as a whole.

Optionally, the time domain signal position of the second PTRS port is determined by translating the time domain signal position of the first PTRS port toward the intermediate. For example, a PTRS sample located at a first half of the time domain signal position is translated backward by r time domain positions, and a PTRS sample located at a second half of the time domain signal position is translated forward by r time domain positions.

r may be equal to the length y of the PTRS group. Alternatively, when an entire time domain signal is divided as shown in (a), (c), (d), and (e) in FIG. 3, r may be equal to a half of a length of each part of the time domain signal.

Implementation 5: The first PTRS port and the second PTRS port occupy a time domain signal position of a same PTRS group, and use a same OCC sequence. The two PTRS ports use different PTRS sequences, and the network device may distinguish between the first PTRS port and the second PTRS port by identifying different PTRS sequences.

Generation parameters corresponding to PTRS sequences used by the first PTRS port and the second PTRS port are different. For example, initial values $c_{init}$ used by the first PTRS port and the second PTRS port are different. The network device may configure, by using an RRC message, an initial value $c_{init\_1}$ corresponding to the first PTRS port and an initial value $c_{init\_2}$ corresponding to the second PTRS port. Alternatively, the network device may configure the initial value $c_{init\_1}$ for only the first PTRS port, and the initial value $c_{init\_2}$ corresponding to the second PTRS port is determined based on the initial value $c_{init\_1}$. For example, the initial value $c_{init\_2}$ is equal to the initial value $c_{init\_1}$ plus a value, or multiplied by a value.

Implementation 6: The two PTRS ports use different OFDM symbols, to distinguish between different PTRS ports. It is assumed that an uplink data channel PUSCH occupies L consecutive OFDM symbols, and the two PTRS ports occupy some of the L OFDM symbols. For example, one slot includes 14 OFDM symbols in total, and the PUSCH occupies OFDM symbols of {4, 5, 6, 7, 8, 9, 10, 11, 12, and 13} in the OFDM symbols, that is, 10 symbols in total. The first PTRS port occupies a 1st symbol, a 5th symbol, and a 9th symbol, namely, OFDM symbols {4, 8, and 12}, in the OFDM symbols occupied by the PUSCH, and the second PTRS port occupies a 2nd symbol, a 6th symbol, and a 10th symbol, namely, OFDM symbols {5, 9, and 13}, in the OFDM symbols occupied by the PUSCH.

The following rules are introduced for the terminal device and the network device to determine a specific symbol that is in the OFDM symbols occupied by the PUSCH and that is used by each PTRS port. Both the network device and the terminal device determine, according to the following rules, an OFDM symbol corresponding to each PTRS port. Specifically, an OFDM symbol set $S_j$ corresponding to each PTRS port j needs to be determined. Each PTRS port may correspond to a plurality of OFDM symbols, that is, a PTRS signal corresponding to each PTRS port is repeatedly sent on the plurality of OFDM symbols.

It is assumed that $L_{PT-RS}$ is time domain density of a PTRS, and represents a minimum quantity of OFDM symbol intervals between OFDM symbols used for the PTRS. It is assumed that the PUSCH occupies L OFDM symbols in total. It is assumed that i is an identifier of an OFDM symbol group to be traversed, and an initial value of i is 1. It is assumed that $l_{ref}$ is a reference symbol, and represents an OFDM symbol from which traversal is performed. An OFDM symbol corresponding to each PTRS port is determined according to the following rules.

Step 1: Select first two OFDM symbols in the L OFDM symbols, and determine whether a DMRS exists on the two OFDM symbols.

If a DMRS exists on one of the two OFDM symbols, the OFDM symbol is set as the reference symbol $l_{ref}$; or if DMRSs exist on both OFDM symbols, a next OFDM symbol is set as the reference symbol $l_{ref}$.

If no DMRS exists on the two OFDM symbols, a 2nd OFDM symbol the two OFDM symbols is used as the reference symbol $l_{ref}$. In addition, the 2nd OFDM symbol is used as an OFDM symbol corresponding to a PTRS port 0, in other words, the 2nd OFDM symbol is included in an OFDM symbol set $S_0$ corresponding to the PTRS port 0. A 1st OFDM symbol is used as an OFDM symbol corresponding to a PTRS port 1, in other words, the 1st OFDM symbol is included in an OFDM symbol set $S_1$ corresponding to the PTRS port 1.

Step 2: Select an $i^{th}$ (where an initial value of i is 1) group of OFDM symbols after the reference symbol $l_{ref}$, where each group of OFDM symbols includes $L_{PT-RS}$ symbols.

If a DMRS exists on an OFDM symbol in the group of OFDM symbols, the OFDM symbol on which a DMRS exists (if there are a plurality of OFDM symbols on which a DMRS exists, a last one is selected) is used as the reference symbol $l_{ref}$, i is reset to the initial value 1, and then step 2 is performed.

If no DMRS exists on the group of OFDM symbols, a last OFDM symbol in the group of OFDM symbols is used as the OFDM symbol corresponding to the PTRS port 0, in other words, the last OFDM symbol is included in the OFDM symbol set $S_0$ corresponding to the PTRS port 0. A $2^{nd}$ last OFDM symbol in the group of OFDM symbols is used as the OFDM symbol corresponding to the PTRS port 1, in other words, the $2^{nd}$ last OFDM symbol is included in the OFDM symbol set $S_1$ corresponding to the PTRS port 1. The value of i is increased by 1, and step 2 is performed again. Because the value of i is increased by 1, a $2^{nd}$ group of OFDM symbols after the reference symbol $l_{ref}$ is used when step 2 is performed next time.

Step 2 is cyclically performed according to the foregoing method until a selected group of OFDM symbols are out of the foregoing L OFDM symbols. For example, if L=10, $L_{PT-RS}$=4, and a current reference symbol $l_{ref}$ is equal to 8, there are only two symbols after the reference symbol $l_{ref}$, a group of OFDM symbols (including four OFDM symbols) are selected after the reference symbol $l_{ref}$, and the group of OFDM symbols includes symbols other than the L OFDM symbols, the foregoing step is stopped.

In the foregoing method, the PTRS port 0 and the PTRS port 1 may alternatively be interchanged. For example, in step 1, the $2^{nd}$ OFDM symbol may be used as the OFDM symbol of the PTRS port 1, and the $1^{st}$ OFDM symbol may be used as the OFDM symbol of the PTRS port 0. For another example, in step 2, the last OFDM symbol in the group of OFDM symbols may be used as the OFDM symbol of the PTRS port 1, and the $2^{nd}$ last OFDM symbol may be used as the OFDM symbol of the PTRS port 0.

The following uses the following example for descriptions. It is assumed that $L_{PT-RS}$=4, and it is assumed that the PUSCH occupies 10 OFDM symbols numbered from 0 to 9. In a first example, a DMRS exists on the first OFDM symbol, namely, the OFDM symbol {0}. According to the descriptions in step 1, the first OFDM symbol is used as the reference symbol. Then, step 2 is performed. To be specific, a first group of OFDM symbols in which $L_{PT-RS}$ is equal to 4, namely, OFDM symbols {1, 2, 3, and 4}, after the reference symbol, is selected. No DMRS exists on the group of OFDM symbols. Therefore, a last OFDM symbol, namely, the OFDM symbol {4}, is used as the OFDM symbol corresponding to the PTRS port 0, and a $2^{nd}$ last OFDM symbol, namely, the OFDM symbol {3}, is used as the OFDM symbol corresponding to the PTRS port 1. Then, step 2 is performed again. This time, a second group of OFDM symbols in which $L_{PT-RS}$ is equal to 4, namely, OFDM symbols {5, 6, 7, and 8}, is selected. A DMRS exists on the OFDM symbol 5. Therefore, the OFDM symbol {5} is used as the reference symbol according to the descriptions in step 2. Step 2 is performed again. This time, a first group of symbols in which $L_{PT-RS}$ is equal to 4, namely, OFDM symbols {6, 7, 8, and 9}, after the reference symbol, namely, the OFDM symbol {5}, is selected. No DMRS exists on the group of OFDM symbols. Therefore, a last OFDM symbol, namely, the OFDM symbol {9}, is used as the OFDM symbol corresponding to the PTRS port 0, and a $2^{nd}$ last OFDM symbol, namely, the OFDM symbol {8}, is used as the OFDM symbol corresponding to the PTRS port 1.

FIG. 16 is a diagram of OFDM symbols used by a PTRS port according to an embodiment of this application. As shown in FIG. 16, it is determined, based on the steps in the first example, that the PTRS port 0 corresponds to OFDM symbols {4 and 9}, and the PTRS port 1 corresponds to OFDM symbols {3 and 8}.

In the second example, no DMRS exists on first two OFDM symbols, and the second OFDM symbol is used as the reference symbol according to the descriptions in step 1. Then, step 2 is performed. To be specific, a first group of OFDM symbols in which $L_{PT-RS}$ is equal to 4, namely, OFDM symbols {2, 3, 4, and 5}, after the reference symbol, is selected. No DMRS exists on the group of OFDM symbols. Therefore, a last OFDM symbol, namely, the OFDM symbol {5}, is used as the OFDM symbol corresponding to the PTRS port 0, and a $2^{nd}$ last OFDM symbol, namely, the OFDM symbol {4}, is used as the OFDM symbol corresponding to the PTRS port 1. Then, step 2 is performed again. This time, a second group of OFDM symbols in which $L_{PT-RS}$ is equal to 4, namely, OFDM symbols {6, 7, 8, and 9}, is selected. A DMRS exists on the OFDM symbol {6}. Therefore, the OFDM symbol {6} is used as the reference symbol according to the descriptions in step 2. Step 2 is performed again. This time, a reference symbol, a first group of OFDM symbols in which $L_{PT-RS}$ is equal to 4, namely, after the OFDM symbol {6}, is selected. Because only three OFDM symbols are left to belong to the PUSCH, and the group of OFDM symbols in which $L_{PT-RS}$ is equal to 4 includes symbols not occupied by the PUSCH, the foregoing steps are stopped.

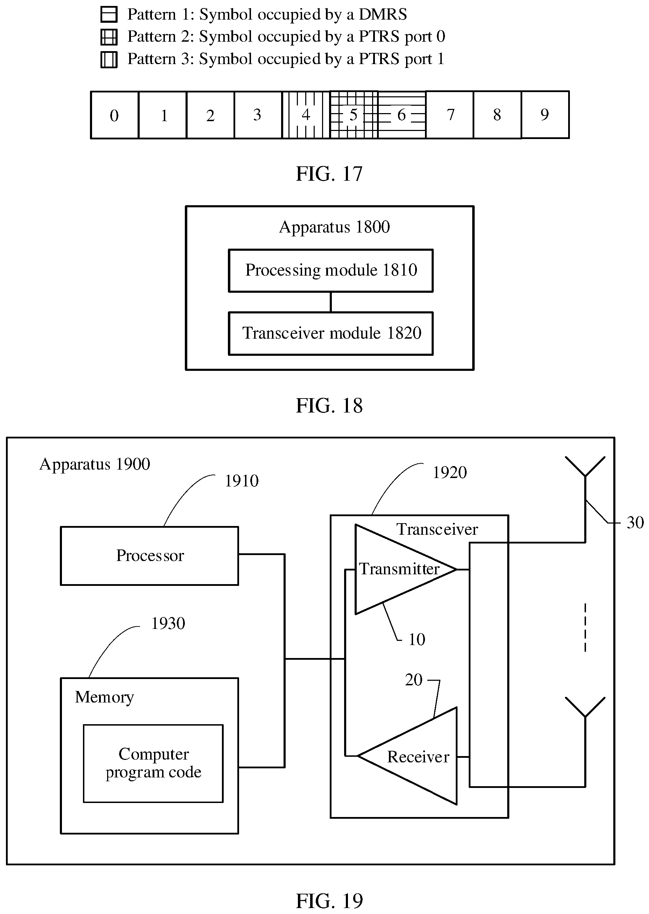

FIG. 17 is a diagram of OFDM symbols used by another PTRS port according to an embodiment of this application. As shown in FIG. 17, it is determined, based on the steps in the second example, that the PTRS port 0 corresponds to the OFDM symbol {5}, and the PTRS port 1 corresponds to the OFDM symbol {4}.

It may be specified that when two PTRS ports are used, time domain density $L_{PT-RS}$ of a PTRS is at least 2, that is, cannot be configured as 1. In a conventional technology, the time domain density $L_{PT-RS}$ of the PTRS is determined based on a modulation and coding scheme (modulation and coding scheme, MCS) used by the PUSCH. Specifically, specific time domain density is selected based on a used MCS index (index) $I_{MCS}$.

As shown in Table 5, when the $I_{MCS}$ is in a first range ($I_{MCS}$<ptrs-MCS1), the PTRS is not used; when the $I_{MCS}$ is in a second range (ptrs-MCS1≤IMCS<ptrs-MCS2), the time domain density of the PTRS is 4; when the $I_{MCS}$ is in a third range (ptrs-MCS2≤IMCS<ptrs-MCS3), the time domain density of the PTRS is 2; or when the $I_{MCS}$ is in a fourth range (ptrs-MCS3≤IMCS<ptrs-MCS4), the time domain density of the PTRS is 1. ptrs-MCS1, ptrs-MCS2, ptrs-MCS3 and ptrs-MCS4 are MCS thresholds configured by the network device.

When the two PTRS ports are used, some optimization needs to be performed based on the conventional technology. Specifically, the third range and the fourth range may be combined into a large range (ptrs-MCS2≤$I_{MCS}$<ptrs-MCS4). When the $I_{MCS}$ is in the large range, the time domain density of the PTRS is 2.

Table 5

| Scheduled MCS (scheduled MCS) | Time domain density ($L_{PT-RS}$) |
|---|---|
| $I_{MCS}$<ptrs-MCS1 | - |
| ptrs-MCS1≤$I_{MCS}$<ptrs-MCS2 | 4 |
| ptrs-MCS2≤$I_{MCS}$<ptrs-MCS3 | 2 |
| ptrs-MCS3≤$I_{MCS}$<ptrs-MCS4 | 1 |

Time domain signal mapping rules for the two PTRS ports described in any one of the foregoing Implementation 1 to Implementation 6 may be used to distinguish between different PTRS ports of the terminal device, to support transmission of a plurality of PTRS ports in a DFT-s-OFDM waveform.

In the foregoing embodiments, two PTRS ports are used as an example for descriptions. A plurality of provided implementations may also be applicable to a scenario in which a quantity of PTRS ports used by the terminal device is greater than two. This is not limited in embodiments of this application.

It should be understood that sequence numbers of the foregoing processes do not mean execution sequences. The execution sequence of the processes should be determined based on functions and internal logic of the processes, and should not be construed as any limitation on implementation processes of embodiments of this application.

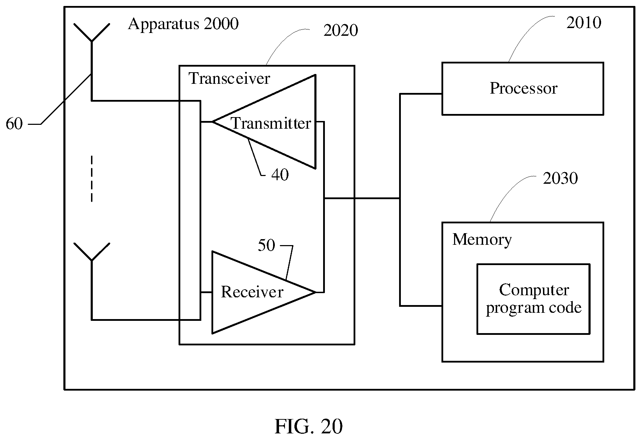

The foregoing describes in detail the data transmission methods in embodiments of this application with reference to FIG. 1 to FIG. 17. The following describes in detail data transmission apparatuses in embodiments of this application with reference to FIG. 18 and FIG. 20.

FIG. 18 is a schematic block diagram of a data transmission apparatus 1800 according to an embodiment of this application. As shown in FIG. 18, the apparatus 1800 includes a processing module 1810 and a transceiver module 1820.

In a possible implementation, the apparatus 1800 is a terminal device or a chip of the terminal device.

In an embodiment, the processing module 1810 is configured to: determine x PTRS groups, where each PTRS group includes y PTRS samples, and x and y are integers greater than or equal to 2; determine a first PTRS signal corresponding to a first PTRS port, where the first PTRS signal includes z1 PTRS samples; and determine a second PTRS signal corresponding to a second PTRS port, where the second PTRS signal includes z2 PTRS samples. The transceiver module 1820 is configured to: during uplink data transmission, send the first PTRS signal corresponding to the first PTRS port and the second PTRS signal corresponding to the second PTRS port.

Optionally, the z1 PTRS samples include a PTRS sample included in x1 PTRS groups, the z2 PTRS samples include a PTRS sample included in x2 PTRS groups, and x1+x2=x.

Optionally, when a same quantity of RBs are used for the uplink data transmission, x is equal to twice a quantity of PTRS groups corresponding to sending a PTRS signal through a single PTRS port.

Optionally, the x1 PTRS groups include an odd-numbered PTRS group in the x PTRS groups, and the x2 PTRS groups include an even-numbered PTRS group in the x PTRS groups; or the x1 PTRS groups include an even-numbered PTRS group in the x PTRS groups, and the x2 PTRS groups include an odd-numbered PTRS group in the x PTRS groups.

Optionally, the z1 PTRS samples include a first part of PTRS samples in each of the x PTRS groups, the z2 PTRS samples include a second part of PTRS samples in each of the x PTRS groups, and the first part of PTRS samples and the second part of PTRS samples are two parts of PTRS samples included in one PTRS group.

Optionally, when the same quantity of RBs are used for the uplink data transmission, y is equal to twice a quantity of PTRS samples included in a PTRS group corresponding to sending a PTRS signal through a single PTRS port.

Optionally, the first part of PTRS samples includes a first half of PTRS samples in one PTRS group, and the second part of PTRS samples includes a second half of PTRS samples in the one PTRS group; or the first part of PTRS samples includes a second half of PTRS samples in one PTRS group, and the second part of PTRS samples includes a first half of PTRS samples in the one PTRS group.

Optionally, the transceiver module 1820 is configured to receive first information from a network device, where the first information is for configuring a waveform corresponding to the uplink data transmission, a transmission mode used for the uplink data transmission, and a maximum quantity N of PTRS ports used for the uplink data transmission. The processing module 1810 is configured to determine, based on the one or more of the waveform, the transmission mode, or the maximum quantity of PTRS ports, a quantity M of PTRS ports used for the uplink data transmission.

The waveform includes a DFT-s-OFDM waveform or a CP-OFDM waveform, and N is a positive integer greater than or equal to 1. The transmission mode includes at least one or more of a first transmission mode, a second transmission mode, or a third transmission mode. The first transmission mode is sending a same data stream of a same TB separately via two uplink beams. The second transmission mode is sending different data streams of a same TB separately via two uplink beams. The third transmission mode is sending data streams of two different TBs respectively via two uplink beams.

Optionally, the processing module 1810 is configured to: if N=2, the waveform is the DFT-s-OFDM waveform, and the transmission mode is the first transmission mode, determine M=1; or if N=2, the waveform is the DFT-s-OFDM waveform, and the transmission mode is the second transmission mode, determine M=2; or if N=2, the waveform is the DFT-s-OFDM waveform, and the transmission mode is the third transmission mode, determine M=2.

Optionally, when N=2, the waveform is the DFT-s-OFDM waveform, and the transmission mode is the second transmission mode, if a quantity of data streams for the uplink data transmission is equal to 2, a waveform used for the uplink data transmission is the DFT-s-OFDM waveform; or if a quantity of data streams for the uplink data transmission is greater than 2, a waveform used for the uplink data transmission is the CP-OFDM waveform.

In another embodiment, the processing module 1810 is configured to: determine x PTRS groups, where each PTRS group includes y PTRS samples, and x and y are integers greater than or equal to 2; determine a first PTRS signal corresponding to a first PTRS port, where the first PTRS signal includes all PTRS samples in the x PTRS groups, and the first PTRS signal is modulated by using a first OCC sequence; and determine a second PTRS signal corresponding to a second PTRS port, where the second PTRS signal includes all the PTRS samples in the x PTRS groups, and the second PTRS signal is modulated by using a second OCC sequence. The first OCC sequence and the second OCC sequence are two of y OCC sequences. The transceiver module 1820 is configured to: during uplink data transmission, send the first PTRS signal corresponding to the first PTRS port and the second PTRS signal corresponding to the second PTRS port.

Optionally, the first OCC sequence is an OCC sequence numbered $q_0$ in the y OCC sequences, the second OCC sequence is a sequence numbered $q_1$ in the y OCC sequences, and $q_0$ and $q_1$ are respectively calculated by using the following formulas:

$$q_0 = N_{RNTI} \bmod (y/2);$$

and

$$q_1 = N_{RNTI} \bmod (y/2) + (y/2).$$

$N_{RNTI}$ represents a cell-radio network temporary identifier (C-RNTI).

Optionally, the first OCC sequence is an OCC sequence numbered $q_0$ in the y OCC sequences, the second OCC sequence is a sequence numbered $q_1$ in the y OCC sequences, and $q_0$ and $q_1$ are respectively calculated by using the following formulas:

$$q_0 = (N_{RNTI} \bmod (y/2)) * 2;$$

and

$$q_1 = (N_{RNTI} \bmod (y/2)) * 2 + 1.$$

$N_{RNTI}$ represents a cell-radio network temporary identifier (C-RNTI).

Optionally, when the same quantity of RBs are used for the uplink data transmission, y is equal to twice a quantity of PTRS samples included in a PTRS group corresponding to sending a PTRS signal through a single PTRS port.

In an optional example, a person skilled in the art may understand that the apparatus 1800 may be specifically the terminal device in the foregoing embodiments, or functions of the terminal device in the foregoing embodiments may be integrated into the apparatus 1800. The functions may be implemented by hardware, or may be implemented by hardware executing corresponding software. The hardware or software includes one or more modules corresponding to the functions. For example, the transceiver module 1820 may be a communication interface, for example, a transceiver interface. The apparatus 1800 may be configured to perform procedures and/or steps corresponding to the terminal device in the foregoing method embodiments.

It should be understood that the apparatus 1800 herein is implemented in a form of a functional module. The term "module" herein may refer to an application specific integrated circuit (application specific integrated circuit, ASIC), an electronic circuit, a processor (for example, a shared processor, a dedicated processor, or a group processor) configured to execute one or more software or firmware programs, a memory, a combined logic circuit, and/or another appropriate component supporting the described function.

In this embodiment of this application, the apparatus 1800 may alternatively be a chip or a chip system, for example, a system on chip (system on chip, SoC). Correspondingly, the transceiver module 1820 may be a transceiver circuit of the chip. This is not limited herein.

Optionally, the transceiver module 1820 includes a receiving module and a sending module (not shown in the figure). The receiving module may be configured to receive the first information from the network device, where the first information is for configuring the waveform corresponding to the uplink data transmission, the transmission mode used for the uplink data transmission, and the maximum quantity N of PTRS ports used for the uplink data transmission. The sending module may be configured to: during the uplink transmission, send the first PTRS signal corresponding to the first PTRS port and the second PTRS signal corresponding to the second PTRS port.

FIG. 19 is a schematic block diagram of another data transmission apparatus 1900 according to an embodiment of this application. The apparatus 1900 includes a processor 1910, a transceiver 1920, and a memory 1930. The processor 1910, the transceiver 1920, and the memory 1930 communicate with each other through an internal connection path. The memory 1930 is configured to store instructions. The processor 1910 is configured to execute the instructions stored in the memory 1930, to control the transceiver 1920 to send a signal and/or receive a signal.

It should be understood that the apparatus 1900 may be specifically the terminal device in the foregoing embodiments, or functions of the terminal device in the foregoing embodiments may be integrated into the apparatus 1900. The apparatus 1900 may be configured to perform steps and/or procedures corresponding to the terminal device in the foregoing method embodiments.

It should be understood that functions of the apparatus 1800 in the foregoing embodiment may be integrated into the apparatus 1900, and the apparatus 1900 may be configured to perform steps and/or procedures corresponding to the terminal device in the foregoing method embodiments. Optionally, the memory 1930 may include a read-only memory and a random access memory, and provide instructions and data to the processor. A part of the memory 1930 may further include a non-volatile random access memory. For example, the memory 1930 may further store information about a device type. The processor 1910 may be configured to execute the instructions stored in the memory 1930. When the processor 1910 executes the instructions, the processor 1910 may perform the steps and/or procedures corresponding to the terminal device in the foregoing method embodiments.

FIG. 20 is a schematic block diagram of still another data transmission apparatus 2000 according to an embodiment of this application. The apparatus 2000 includes a processor 2010, a transceiver 2020, and a memory 2030. The processor 2010, the transceiver 2020, and the memory 2030 communicate with each other through an internal connection path. The memory 2030 is configured to store instructions. The processor 2010 is configured to execute the instructions stored in the memory 2030, to control the transceiver 2020 to send a signal and/or receive a signal.

It should be understood that the apparatus 2000 may be specifically the network device in the foregoing embodiments, or functions of the network device in the foregoing embodiments may be integrated into the apparatus 2000. The apparatus 2000 may be configured to perform steps and/or procedures corresponding to the network device in the foregoing method embodiments.

Optionally, the transceiver 1920 may include a transmitter 10, a receiver 20, and an antenna 30, and the transceiver 2020 may include a transmitter 40, a receiver 50, and an antenna 60.

The receiver 20 of the apparatus 1900 may be configured to receive transmission control information through the antenna 30, and the transmitter 10 may be configured to send transmission feedback information to the apparatus 2000 through the antenna 30. The transmitter 40 may be configured to send transmission control information to the apparatus 1900 through the antenna 60, and the receiver 50 may be configured to receive, through the antenna 60, transmission feedback information sent by the apparatus 1900.

It should be understood that, in this embodiment of this application, the processor 1910 or the processor 2010 may be a central processing unit (central processing unit, CPU) or a baseband processor, or the processor 1910 or the processor 2010 may be another general purpose processor, a digital signal processor (digital signal processing, DSP), or an application specific integrated circuit (application specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

This application further provides a computer-readable storage medium. The computer-readable storage medium stores computer-executable instructions. When the computer-executable instructions are executed by a processor, the method performed by a terminal device in any one of the foregoing method embodiments may be implemented.

This application further provides a computer program product, including a computer program. When the computer program is executed by a processor, the method performed by a terminal device in any one of the foregoing method embodiments may be implemented.

In an implementation process, steps in the foregoing methods can be implemented by using a hardware integrated logical circuit in the processor, or by using instructions in a form of software. The steps of the method disclosed with reference to embodiments of this application may be directly performed by a hardware processor, or may be performed by using a combination of hardware in the processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads instructions in the memory and completes the steps in the foregoing methods in combination with hardware of the processor. To avoid repetition, details are not described herein again.

A person of ordinary skill in the art may be aware that, in combination with the examples described in embodiments disclosed in this specification, modules and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief descriptions, for a detailed working process of the foregoing system, apparatus, and module, refer to a corresponding process in the foregoing method embodiments. Details are not described herein again.

In the several embodiments provided in this application, it should be understood that the disclosed system, apparatus, and method may be implemented in other manners. For example, the apparatus embodiments described above are merely examples. For example, division of modules is merely logical function division. In an actual implementation, there may be another division manner. For example, a plurality of modules or components may be combined or integrated into another system, or some characteristics may be ignored or not performed. In addition, the displayed or discussed mutual couplings or direct couplings or communication connections may be implemented through some interfaces. The indirect couplings or communication connections between the apparatuses or modules may be implemented in electronic, mechanical, or other forms.

The modules described as separate parts may or may not be physically separate, and parts displayed as modules may or may not be physical modules, may be located in one position, or may be distributed on a plurality of network modules. Some or all the modules may be selected according to actual needs to achieve the objectives of the solutions of embodiments.

In addition, functional modules in embodiments of this application may be integrated into one processing module, or each of the modules may exist alone physically, or two or more modules are integrated into one module.

When the functions are implemented in the form of a software functional module and sold or used as an independent product, the functions may be stored in a computer-readable storage medium. Based on such an understanding, the technical solutions of this application essentially, or the part contributing to a conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of embodiments of this application. Any variation or replacement readily figured out by a person skilled in the art within the technical scope disclosed in embodiments of this application shall fall within the protection scope of embodiments of this application. Therefore, the protection scope of embodiments of this application shall be subject to the protection scope of the claims.

**Claims**

1. A data transmission method, comprising:

determining x phase tracking reference signal PTRS groups, wherein each of the x PTRS groups comprises y PTRS samples, and x and y are integers greater than or equal to 2;
determining a first PTRS signal corresponding to a first PTRS port, wherein the first PTRS signal comprises z1 PTRS samples;
determining a second PTRS signal corresponding to a second PTRS port, wherein the second PTRS signal comprises z2 PTRS samples, wherein

z1 and z2 are positive integers, and a sum of z1 and z2 is equal to a product of x and y; and

during uplink data transmission, sending the first PTRS signal corresponding to the first PTRS port and the second PTRS signal corresponding to the second PTRS port.

2. The method according to claim 1, wherein the z1 PTRS samples comprise a PTRS sample comprised in x1 PTRS groups, the z2 PTRS samples comprise a PTRS sample comprised in x2 PTRS groups, and x1+x2=x.

3. The method according to claim 2, wherein when a same quantity of resource blocks RBs are used for the uplink data transmission, x is equal to twice a quantity of PTRS groups corresponding to sending a PTRS signal by a terminal device through a single PTRS port.

4. The method according to claim 2 or 3, wherein the x1 PTRS groups comprise an odd-numbered PTRS group in the x PTRS groups, and the x2 PTRS groups comprise an even-numbered PTRS group in the x PTRS groups; or

the x1 PTRS groups comprise an even-numbered PTRS group in the x PTRS groups, and the x2 PTRS groups comprise an odd-numbered PTRS group in the x PTRS groups.

5. The method according to claim 1, wherein the z1 PTRS samples comprise a first part of PTRS samples in each of the x PTRS groups, the z2 PTRS samples comprise a second part of PTRS samples in each of the x PTRS groups, and the first part of PTRS samples and the second part of PTRS samples are two parts of PTRS samples comprised in one PTRS group.

6. The method according to claim 5, wherein when a same quantity of RBs are used for the uplink data transmission, y is equal to twice a quantity of PTRS samples comprised in a PTRS group corresponding to sending a PTRS signal by a terminal device through a single PTRS port.

7. The method according to claim 5 or 6, wherein the first part of PTRS samples comprises a first half of PTRS samples in one PTRS group, and the second part of PTRS samples comprises a second half of PTRS samples in the one PTRS group; or

the first part of PTRS samples comprises a second half of PTRS samples in one PTRS group, and the second part of PTRS samples comprises a first half of PTRS samples in the one PTRS group.

8. The method according to any one of claims 1 to 7, wherein the method further comprises:

receiving first information from a network device, wherein the first information is for configuring a waveform corresponding to the uplink data transmission, a transmission mode used for the uplink data transmission, and a maximum quantity N of PTRS ports used for the uplink data transmission; and

determining, based on one or more of the waveform, the transmission mode, or the maximum quantity of PTRS ports, a quantity M of PTRS ports used for the uplink data transmission, wherein

the waveform comprises a discrete Fourier transform-spread-orthogonal frequency division multiplexing DFT-s-OFDM waveform or a cyclic prefix-orthogonal frequency division multiplexing CP-OFDM waveform, and N is a positive integer greater than or equal to 1; and

the transmission mode comprises at least one or more of a first transmission mode, a second transmission mode, or a third transmission mode, the first transmission mode is sending a same data stream of a same transport block TB separately via two uplink beams, the second transmission mode is sending different data streams of a same TB separately via two uplink beams, and the third transmission mode is sending data streams of two different TBs respectively via two uplink beams.

9. The method according to claim 8, wherein determining, based on the one or more of the waveform, the transmission mode, or the maximum quantity of PTRS ports, the quantity M of PTRS ports used for the uplink data transmission comprises:

if N=2, the waveform is the DFT-s-OFDM waveform, and the transmission mode is the first transmission mode, determining that M=1; or

if N=2, the waveform is the DFT-s-OFDM waveform, and the transmission mode is the second transmission mode, determining that M=2; or

if N=2, the waveform is the DFT-s-OFDM waveform, and the transmission mode is the third transmission mode, determining that M=2.

10. The method according to claim 9, wherein the method further comprises:

   when N=2, the waveform is the DFT-s-OFDM waveform, and the transmission mode is the second transmission mode,
   if a quantity of data streams for the uplink data transmission is equal to 2, a waveform used for the uplink data transmission is the DFT-s-OFDM waveform; or
   if a quantity of data streams for the uplink data transmission is greater than 2, a waveform used for the uplink data transmission is the CP-OFDM waveform.

11. A data transmission method, comprising:

   determining x phase tracking reference signal PTRS groups, wherein each of the x PTRS groups comprises y PTRS samples, and x and y are integers greater than or equal to 2;
   determining a first PTRS signal corresponding to a first PTRS port, wherein the first PTRS signal comprises all PTRS samples in the x PTRS groups, and the first PTRS signal is modulated by using a first orthogonal cover code OCC sequence;
   determining a second PTRS signal corresponding to a second PTRS port, wherein the second PTRS signal comprises all the PTRS samples in the x PTRS groups, and the second PTRS signal is modulated by using a second OCC sequence, wherein
   the first OCC sequence and the second OCC sequence are two of y OCC sequences; and
   during uplink data transmission, sending the first PTRS signal corresponding to the first PTRS port and the second PTRS signal corresponding to the second PTRS port.

12. The method according to claim 11, wherein that the first OCC sequence and the second OCC sequence are two of the y OCC sequences comprises:
   the first OCC sequence is an OCC sequence numbered $q_0$ in the y OCC sequences, the second OCC sequence is a sequence numbered $q_1$ in the y OCC sequences, and $q_0$ and $q_1$ are respectively calculated by using the following formulas:

$$q_0 = N_{RNTI} \bmod (y/2);$$

   and

$$q_1 = N_{RNTI} \bmod (y/2) + (y/2),$$

   wherein
   $N_{RNTI}$ represents a cell-radio network temporary identifier of a terminal device.

13. The method according to claim 11, wherein that the first OCC sequence and the second OCC sequence are two of the y OCC sequences comprises:
   the first OCC sequence is an OCC sequence numbered $q_0$ in the y OCC sequences, the second OCC sequence is a sequence numbered $q_1$ in the y OCC sequences, and $q_0$ and $q_1$ are respectively calculated by using the following formulas:

$$q_0 = (N_{RNTI} \bmod (y/2)) * 2;$$

   and

$$q_1 = (N_{RNTI} \bmod (y/2)) * 2 + 1,$$

   wherein
   $N_{RNTI}$ represents a cell-radio network temporary identifier of a terminal device.

14. The method according to any one of claims 11 to 13, wherein when a same quantity of resource blocks RBs are used for the uplink data transmission, y is equal to twice a quantity of PTRS samples comprised in a PTRS group corresponding to sending a PTRS signal by the terminal device through a single PTRS port.

15. A data transmission apparatus, comprising a module configured to implement the method according to any one of claims 1 to 14.

16. A data transmission apparatus, comprising a processor, wherein the processor is coupled to a memory, the memory is configured to store a program or instructions, and when the program or the instructions are executed by the processor, the apparatus is enabled to perform the method according to any one of claims 1 to 14.

17. A computer-readable storage medium, configured to store a computer program, wherein when the computer program is run on a computer, the computer is enabled to perform the method according to any one of claims 1 to 14.

FIG. 1

$\{c_0, c_1, c_2, c_3, c_4, c_5, c_6, c_7, c_8, c_9, ..., \text{ and } c_n\}$ → DFT module

FIG. 2

(a)

(b)

(c)

(d)

(e)

FIG. 3

(a)

(b)

FIG. 4

500

| Network device | | Terminal device |
|---|---|---|

S501: First information →

S502: Determine, based on the first information, a quantity M of PTRS ports used for uplink data transmission

S503: Determine a time domain signal mapping rule corresponding to the M PTRS ports used for the uplink data transmission

← S504: PTRS signals corresponding to the M PTRS ports

S505: Uplink scheduling information →

FIG. 5

600

Determine x PTRS groups, where each PTRS group includes y PTRS samples — S601

Determine a first PTRS signal corresponding to a first PTRS port, where the first PTRS signal includes z1 PTRS samples — S602

Determine a second PTRS signal corresponding to a second PTRS port, where the second PTRS signal includes z2 PTRS samples — S603

During uplink data transmission, send the first PTRS signal corresponding to the first PTRS port and the second PTRS signal corresponding to the second PTRS port — S604

FIG. 6

FIG. 7

FIG. 8

FIG. 9

FIG. 10

FIG. 11

FIG. 12

FIG. 13

FIG. 14

<u>1500</u>

| Determine x PTRS groups, where each PTRS group includes y PTRS samples | S1501 |

| Determine a first PTRS signal corresponding to a first PTRS port, where the first PTRS signal includes all PTRS samples in the x PTRS groups, and the first PTRS signal is modulated by using a first OCC sequence | S1502 |

| Determine a second PTRS signal corresponding to a second PTRS port, where the second PTRS signal includes all the PTRS samples in the x PTRS groups, and the second PTRS signal is modulated by using a second OCC sequence | S1503 |

| During uplink data transmission, send the first PTRS signal corresponding to the first PTRS port and the second PTRS signal corresponding to the second PTRS port | S1504 |

FIG. 15

Pattern 1: Symbol occupied by a DMRS
Pattern 2: Symbol occupied by a PTRS port 0
Pattern 3: Symbol occupied by a PTRS port 1

| 0 | 1 | 2 | 3 | 4 | 5 | 6 | 7 | 8 | 9 |

FIG. 16

Pattern 1: Symbol occupied by a DMRS
Pattern 2: Symbol occupied by a PTRS port 0
Pattern 3: Symbol occupied by a PTRS port 1

| 0 | 1 | 2 | 3 | 4 | 5 | 6 | 7 | 8 | 9 |

**FIG. 17**

Apparatus 1800

Processing module 1810

Transceiver module 1820

**FIG. 18**

Apparatus 1900

1910

Processor

1930

Memory

Computer program code

1920

Transceiver

Transmitter

10

20

Receiver

30

**FIG. 19**

FIG. 20

## INTERNATIONAL SEARCH REPORT

| International application No. |
|---|
| **PCT/CN2024/075043** |

| A. | CLASSIFICATION OF SUBJECT MATTER |
|---|---|

H04L 5/00(2006.01)i

According to International Patent Classification (IPC) or to both national classification and IPC

| B. | FIELDS SEARCHED |
|---|---|

Minimum documentation searched (classification system followed by classification symbols)

IPC:H04L,H04W

Documentation searched other than minimum documentation to the extent that such documents are included in the fields searched

Electronic data base consulted during the international search (name of data base and, where practicable, search terms used)

3GPP, CNTXT, ENTXTC, DWPI, CJFD: 端口, 图案, 图样, 样本, 组, 相位跟踪参考信号, 正交, port, pattern, sample, group, phase tracking reference signal, PTRS, PT-RS, orthogonal, DFT-s-OFDM

| C. | DOCUMENTS CONSIDERED TO BE RELEVANT |
|---|---|

| Category* | Citation of document, with indication, where appropriate, of the relevant passages | Relevant to claim No. |
|---|---|---|
| X | US 2023006794 A1 (NOKIA TECHNOLOGIES OY) 05 January 2023 (2023-01-05) description, paragraphs [0046]-[0063] and [0078]-[0087], and figures 3-4 and 8-9 | 1-17 |
| A | CN 110679109 A (HUAWEI TECHNOLOGIES CO., LTD.) 10 January 2020 (2020-01-10) entire document | 1-17 |
| A | CN 111585930 A (HUAWEI TECHNOLOGIES CO., LTD.) 25 August 2020 (2020-08-25) entire document | 1-17 |
| A | WO 2022036529 A1 (HUAWEI TECHNOLOGIES CO., LTD.) 24 February 2022 (2022-02-24) entire document | 1-17 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **26 April 2024** | **06 May 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

| | International application No. |
|---|---|
| | **PCT/CN2024/075043** |

| Patent document cited in search report | | | Publication date (day/month/year) | Patent family member(s) | | | Publication date (day/month/year) |
|---|---|---|---|---|---|---|---|
| US | 2023006794 | A1 | 05 January 2023 | WO | 2021160925 | A1 | 19 August 2021 |
| CN | 110679109 | A | 10 January 2020 | US | 2020076647 | A1 | 05 March 2020 |
| | | | | BR | 112019023206 | A2 | 19 May 2020 |
| | | | | PL | 3621235 | T3 | 31 January 2022 |
| | | | | EP | 3621235 | A1 | 11 March 2020 |
| | | | | JP | 2020519185 | A | 25 June 2020 |
| | | | | EP | 3917057 | A1 | 01 December 2021 |
| | | | | US | 2022116246 | A1 | 14 April 2022 |
| | | | | CA | 3062381 | A1 | 26 November 2019 |
| | | | | WO | 2018202128 | A1 | 08 November 2018 |
| | | | | CN | 108809598 | A | 13 November 2018 |
| | | | | JP | 2020519185 | W | 25 June 2020 |
| CN | 111585930 | A | 25 August 2020 | None | | | |
| WO | 2022036529 | A1 | 24 February 2022 | EP | 4187830 | A1 | 31 May 2023 |
| | | | | US | 2023198715 | A1 | 22 June 2023 |
| | | | | CN | 115804038 | A | 14 March 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310155124